(19) Europäisches Patentamt
European Patent Office
Office européen des brevets

(11) EP 3 333 942 A1

(12) # EUROPEAN PATENT APPLICATION

published in accordance with Art. 153(4) EPC

(43) Date of publication:
**13.06.2018 Bulletin 2018/24**

(21) Application number: **16833013.2**

(22) Date of filing: **02.08.2016**

(51) Int Cl.:
***H01M 4/133*** *(2010.01)* ***H01M 4/13*** *(2010.01)*
***H01M 4/134*** *(2010.01)* ***H01M 4/1393*** *(2010.01)*
***H01M 4/1395*** *(2010.01)* ***H01M 4/36*** *(2006.01)*
***H01M 4/38*** *(2006.01)* ***H01M 4/48*** *(2010.01)*
***H01M 4/587*** *(2010.01)* ***H01M 4/62*** *(2006.01)*
***H01M 10/052*** *(2010.01)* ***H01M 10/0566*** *(2010.01)*

(86) International application number:
**PCT/JP2016/072570**

(87) International publication number:
**WO 2017/022734 (09.02.2017 Gazette 2017/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.08.2015 JP 2015154574**

(71) Applicants:
- **Mitsui Chemicals, Inc.**
  **Minato-ku**
  **Tokyo 105-7122 (JP)**
- **Shin-Etsu Chemical Co., Ltd.**
  **Tokyo 100-0004 (JP)**

(72) Inventors:
- **NISHIURA, Katsunori**
  **Chiba 299-0265 (JP)**
- **SARUYAMA, Masaki**
  **Chiba 299-0265 (JP)**
- **SAKATA, Yoshihiro**
  **Chiba 299-0265 (JP)**
- **ONISHI, Hitoshi**
  **Chiba 299-0265 (JP)**
- **EDA, Akira**
  **Chiba 299-0265 (JP)**
- **OHASHI, Ken**
  **Tokyo 100-0004 (JP)**
- **FURUYA, Masahiro**
  **Gumma 379-0224 (JP)**
- **HIROSE, Takakazu**
  **Gumma 379-0224 (JP)**
- **YOSHIKAWA, Hiroki**
  **Gumma 379-0224 (JP)**

(74) Representative: **Hoffmann Eitle**
**Patent- und Rechtsanwälte PartmbB**
**Arabellastraße 30**
**81925 München (DE)**

(54) **NEGATIVE ELECTRODE FOR LITHIUM ION SECONDARY BATTERY, LITHIUM ION SECONDARY BATTERY COMPRISING SAME, AND METHOD FOR PRODUCING NEGATIVE ELECTRODE FOR LITHIUM ION SECONDARY BATTERY**

(57) The present invention addresses the problem of providing: a negative electrode that is for a lithium ion secondary battery, that has high initial charge/discharge efficiency, and that has high energy density; a lithium ion secondary battery comprising the negative electrode for a lithium ion secondary battery; and a method for producing the negative electrode for a lithium ion battery that makes it possible to efficiently pre-dope an alkali earth metal or an alkali metal such as lithium. In order to solve this problem, this negative electrode for a lithium ion secondary battery comprises a negative electrode mixture layer containing at least: an alloy material (A) comprising tin or silicon capable of occluding lithium; carbon particles (B); an imide bond-containing polymer (C); and a polycyclic aromatic compound (D). The amount of the imide bond-containing polymer (C) within the negative electrode mixture layer is 3-13 mass%.

EP 3 333 942 A1

## Description

### Technical Field

The present invention relates to a negative electrode for a lithium-ion secondary cell, a lithium-ion secondary cell comprising the same, and a method for producing a negative electrode for a lithium-ion secondary cell.

### Background Art

Small sized and light weight lithium-ion secondary cells have been widely used as power sources for electronic apparatuses such as mobile phones and digital cameras in recent years. Such a lithium-ion secondary cell mainly includes a positive electrode and a negative electrode containing material capable of absorption and desorption of lithium, and an electrolyte solution. Lithium-ion secondary cells are required to be further improved in their energy density.

To improve the energy density, high-capacity negative electrode active materials, for example, Si-based and Sn-based negative electrode active materials, have been contemplated. These negative electrode active materials, however, have a large irreversible capacity during an initial cycle, and thus, it has been difficult to improve the energy density of the entire cells.

There are suggested techniques for allowing a negative electrode active material to absorb lithium in advance (also referred to as "predoping" hereinbelow). For example, methods are disclosed in which a solution of metal lithium and a polycyclic aromatic compound dissolved in a chain monoether is brought in contact with SiO (a negative electrode active material) to predope SiO with lithium (for example, PTL 1).

### Citation List

#### Patent Literature

PTL 1
Japanese Patent Application Laid-Open No. 2005-108826

### Summary of Invention

#### Technical Problem

The method of PTL 1, however, takes time for lithium predoping. Thus, with a short predoping time, the amount of lithium predoped per unit amount of the negative electrode active material was small. That is, to improve the initial charge/discharge efficiency, further improvement was necessary.

The present invention has been achieved in view of such a problem. An object of the present invention is to provide a negative electrode for a lithium-ion secondary cell having high initial charge/discharge efficiency and a high energy density, a lithium-ion secondary cell including the negative electrode for a lithium-ion secondary cell, and a method for producing a negative electrode for a lithium-ion secondary cell capable of achieving efficient predoping of alkali metal such as lithium or alkaline earth metal.

#### Solution to Problem

The first aspect of the present invention relates to the following negative electrode for a lithium-ion secondary cell and to a lithium-ion secondary cell including the same.

[1] A negative electrode for a lithium-ion secondary cell including a negative electrode-mixture layer, the negative electrode-mixture layer containing at least: an alloy material (A) which contains silicon or tin both capable of absorbing lithium; carbon particles (B); an imide-bond containing polymer (C); and a polycyclic aromatic compound (D); in which the content of the imide-bond containing polymer (C) in the negative electrode-mixture layer is 3 mass% or more and 13 mass% or less.

[2] The negative electrode for a lithium-ion secondary cell according to [1], in which the alloy material (A) contained in the negative electrode-mixture layer has a volume of 7 vol% or more and less than 70 vol% based on the total volume of the alloy material (A) and the carbon particles (B).

[3] The negative electrode for a lithium-ion secondary cell according to [1] or [2], in which the alloy material (A) is a

silicon oxide represented by $SiO_x$ ($0.5 \leq x \leq 1.5$).

[4] The negative electrode for a lithium-ion secondary cell according to [3] in which at least a portion of the silicon oxide is coated with carbon, and the deposition amount of the carbon is 2 to 50 mass% based on the mass of the silicon oxide.

[5] The negative electrode for a lithium-ion secondary cell according to any one of [1] to [4], in which the carbon particles (B) contains at least one type of graphite selected from the group consisting of natural graphite, artificial graphite, and carbon-coated graphite.

[6] The negative electrode for a lithium-ion secondary cell according to any one of [1] to [5], in which the carbon particles (B) have the total pore volume of $1.0 \times 10^{-2}$ to $1.0 \times 10^{-1}$ $cm^3/g$ and have an average pore diameter of 20 to 50 nm, both measured by a nitrogen gas adsorption method.

[7] The negative electrode for a lithium-ion secondary cell according to any one of [1] to [6], in which the carbon particles (B) are secondary aggregates where flat graphite material is aggregated or bonded.

[8] The negative electrode for a lithium-ion secondary cell according to any one of [1] to [7], in which the negative electrode-mixture layer further contains a conductive additive (E).

[9] The negative electrode for a lithium-ion secondary cell according to [8], in which the conductive additive (E) contains carbon fiber having an aspect ratio of 10 to 1,000.

[10] The negative electrode for a lithium-ion secondary cell according to any one of [1] to [9], in which a film having a film thickness of 20 μm made of the imide-bond containing polymer (C) has a mass change of less than 5 mass% when immersed in tetrahydrofuran at 60°C for 24 hours.

[11] The negative electrode for a lithium-ion secondary cell according to any one of [1] to [10], in which the imide-bond containing polymer (C) includes repeating constituent units containing an amide acid structure formed by reaction of a diamine compound with a tetracarboxylic dianhydride, or an imide bond, and the repeating constituent unit has a molecular weight of 600 or less.

[12] The negative electrode for a lithium-ion secondary cell according to any one of [1] to [11], in which the imide-bond containing polymer (C) includes repeating constituent units containing an amide acid structure formed by reaction of a diamine compound with a tetracarboxylic dianhydride, or an imide bond, and the diamine compound contains 50 mol% or more of a low-molecular-weight diamine compound having a molecular weight of 300 or less based on the total amount of the diamine compound.

[13] A lithium-ion secondary cell including the negative electrode for a lithium-ion secondary cell according to any one of [1] to [12].

[14] The lithium-ion secondary cell according to [13], in which the negative electrode for a lithium-ion secondary cell, before energization, contains an alkali metal and/or an alkaline earth metal.

[15] The lithium-ion secondary cell according to [13], in which the alloy material (A), before energization, contains an alkali metal and/or an alkaline earth metal.

A second aspect of the present invention relates to the following method for producing a negative electrode for a lithium-ion secondary cell.

[16] A method for producing a negative electrode for a lithium-ion secondary cell including a negative electrode-mixture layer, the method including obtaining the negative electrode-mixture layer by bringing an active material-containing layer containing at least an alloy material (A) which contains silicon or tin both capable of absorbing lithium, carbon particles (B), and an imide-bond containing polymer (C) into contact with an alkali metal and/or an alkaline earth metal under presence of a polycyclic aromatic compound, in which the alloy material (A) contained in the negative electrode-mixture layer has a volume of 10 vol% or more and less than 70 vol% based on the total volume of the alloy material (A) and the carbon particles (B), and the content of the imide-bond containing polymer (C) in the negative electrode-mixture layer is 3 mass% or more and 13 mass% or less.

[17] The method for producing a negative electrode for a lithium-ion secondary cell according to [16], in which the obtaining the negative electrode-mixture layer is conducted in a solvent.

[18] The method for producing a negative electrode for a lithium-ion secondary cell according to [16] or [17], further including removing the polycyclic aromatic compound from the negative electrode-mixture layer by immersing the negative electrode-mixture layer in a solvent in which the polycyclic aromatic compound is soluble, after the obtaining the negative electrode mixture layer.

A third aspect of the present invention relates to the following lithium-ion secondary cell.

[19] A lithium-ion secondary cell provided with a positive electrode, a negative electrode, and an electrolyte solution,

in which the negative electrode has a negative electrode-mixture layer containing at least an alloy material (A) which contains silicon or tin both capable of absorbing lithium, carbon particles (B), and an imide-bond containing polymer (C), the alloy material (A) contained in the negative electrode-mixture layer has a volume of 7 vol% or more and less than 70 vol% based on the total volume of the alloy material (A) and the carbon particles (B), the content of the imide-bond containing polymer (C) in the negative electrode-mixture layer is 3 mass% or more and 13 mass% or less, and the total molar amount of an alkali metal and an alkaline earth metal contained in the negative electrode at full charge is larger than a molar amount of lithium calculated from a capacity of a positive electrode active material possessed by the positive electrode.

Advantageous Effects of Invention

The present invention enables a negative electrode for a lithium-ion secondary cell to have high initial charge/discharge efficiency and a high energy density.

Description of Embodiments

1. Negative Electrode for Lithium-Ion Secondary Cell

The negative electrode for a lithium-ion secondary cell of the present invention includes a negative electrode-mixture layer that contains at least an alloy material (A) containing silicon or tin both capable of absorbing lithium, carbon particles (B), an imide-bond containing polymer (C), and a polycyclic aromatic compound (D). The negative electrode for a lithium-ion secondary cell usually further includes a collector. The structure of the negative electrode for a lithium-ion secondary cell (also simply referred to as the "negative electrode" hereinbelow) may be appropriately selected depending on applications of the lithium-ion secondary cell. A negative electrode may be a laminate or the like including, for example, a sheet collector and negative electrode-mixture layers disposed on both faces of the collector. The negative electrode of the present invention can be also used as an electrode for a lithium-ion capacitor.

Conventionally, use of alloy materials containing silicon, tin or the like as the negative electrode active material of lithium-ion secondary cells has been contemplated. These alloy materials are, however, likely to have a large irreversible capacity during an initial cycle, and thus, it is difficult to improve the energy density, which has been a problem. Methods for predoping the negative electrode active material with lithium before energization are known, for the purpose of reducing such an irreversible capacity. However, by a conventional method, which takes time for predoping, an amount of lithium predoped per unit amount of the negative electrode active material is small in the case where the doping time is short. Thus, during the initial charge/discharge reaction (for example, $SiO + 4Li^+ + 4e^- \rightarrow 3/4Li_4Si + 1/4Li_4SiO_4$), the amount of the negative electrode active material (SiO in the above formula) that reacts with lithium ions increases. As a result, the amount of the irreversible component formed by the initial charge/discharge reaction ($Si_4LiO_4$ in the above formula) increases to lead to an insufficient increase in the initial charge/discharge efficiency.

In contrast, in the negative electrode for a lithium-ion secondary cell of the present invention, the negative electrode active material includes the alloy material (A) and the carbon particles (B). Combination of the alloy material (A) and the carbon particles (B) as the negative electrode active material markedly increases the amount predoped per unit amount of the active material before energization. As a result, the amount of the irreversible component to be formed extremely decreases. In other words, the initial charge/discharge efficiency increases, and the energy density of the lithium-ion secondary cell becomes sufficiently high. Combination of the alloy material (A) and the carbon particles (B) also reduces the time required when the negative electrode active material is predoped with an alkali metal or alkaline earth metal.

In the negative electrode for a lithium-ion secondary cell of the present invention, the content of the imide-bond containing polymer (C) contained in the negative electrode-mixture layer is 3 to 13 mass%. With a content of the imide-bond containing polymer (C) within the range, predoping of an alkali metal or alkaline earth metal into a negative electrode active material is less likely to be inhibited to thereby increase the amount predoped. Also, an effect is obtained of allowing the negative electrode-mixture layer to become less likely to exfoliate when in contact with an alkali metal or alkaline earth metal.

Each of the components of the negative electrode for a lithium-ion secondary cell of the present invention will be described below.

1-1. Negative Electrode-Mixture Layer

The negative electrode-mixture layer contains at least an alloy material (A), carbon particles (B), an imide-bond containing polymer (C), and a polycyclic aromatic compound (D). In the negative electrode-mixture layer, the alloy material (A) and the carbon particles (B), which are negative electrode active material, are bound by the imide-bond

containing polymer (C). The negative electrode-mixture layer (in particular, the alloy material (A) and the carbon particles (B)) has been predoped with either one or both of an alkali metal and an alkaline earth metal in the presence of the polycyclic aromatic compound, and thus, the negative electrode-mixture layer contains the polycyclic aromatic compound (D). The negative electrode-mixture layer may contain additional materials as required and may contain, for example, a conductive additive (E) and the like. The type of the alkali metal and the alkaline earth metal predoped in the negative electrode-mixture layer is not particularly limited, and is preferably lithium, sodium, magnesium, potassium, or calcium, particularly preferably lithium.

(Alloy Material (A))

The alloy material (A) is a material that contains silicon or tin, both capable of absorbing lithium, as a constituent element and functions as a negative electrode active material (absorbs and desorbs lithium). In the negative electrode of the present invention, an alkali metal or alkaline earth metal is predoped in the alloy material (A) before energization as aforementioned to form a composite of the alloy material (A) and the alkali metal or alkaline earth metal.

The content of the alloy material (A) contained in the negative electrode-mixture layer is preferably 7 vol% or more and less than 70 vol%, more preferably 15 to 65 vol%, still more preferably 15 to 49 vol% based on 100 vol% of the total volume of the alloy material (A) and the carbon particles (B). When the volume ratio between the alloy material (A) and the carbon particles (B) in the negative electrode-mixture layer is within the range, the amount predoped per unit amount of the active material before energization markedly increases. As a result, the amount of an irreversible component to be formed extremely decreases. In other words, the initial charge/discharge efficiency increases, and the energy density of the lithium-ion secondary cell becomes sufficiently high. The above volume ratio is determined with the contents and true specific gravities of the alloy material (A) and the carbon particles (B). The contents of the alloy material (A) and the carbon particles (B) are identified by a known method. Meanwhile, the true specific gravity can be measured using a solid sample pulverized into powder (the alloy material (A) and carbon particles (B)) by a method in compliance with JIS Z8807, and for example, can be measured as follows.

A dried pycnometer was left to stand in a desiccator until it reaches room temperature, and then the mass of the pycnometer W1 is weighed. A sufficiently pulverized sample (alloy material (A) or carbon particles (B)) is placed in the pycnometer, and the mass W2 of (the pycnometer + the sample) is weighed. Subsequently, n-butanol is placed in the pycnometer such that the sample is sufficiently immersed for sufficient degassing. n-Butanol is further added and filled into the pycnometer, which is placed in a thermostatic water bath and allowed to reach 25°C. After the temperatures of n-butanol and the sample reach 25°C, the meniscus of n-butanol is aligned with the reference line, and the n-butanol and sample are left to stand until they reach room temperature. Then, the mass W3 of (the pycnometer + sample + n-butanol) is weighed. A pycnometer is filled only with n-butanol and placed in a thermostat to allow the temperature to reach 25°C. The meniscus of n-butanol is aligned with the reference line, and the n-butanol is left to stand until it reaches room temperature. Then the mass W4 of (the pycnometer + n-butanol) is weighed.

The true specific gravity can be calculated as follows from each of the masses W1, W2, W3, and W4 weighed as aforementioned:

$$\text{True specific gravity} = \{(W2 - W1) \times s\} / \{(W2 - W1) - (W3 - W4)\}$$

wherein s is the specific gravity of n-butanol at 25°C.

The negative electrode-mixture layer contains preferably 77 mass% or more and up to 97 mass%, more preferably 80 to 96 mass% in total of the alloy material (A) and carbon particles (B) described below. When the negative electrode-mixture layer contains the negative electrode active material within the above range, absorption and desorption of an alkali metal or alkaline earth metal is likely to be sufficiently performed.

The particle diameter of the alloy material (A) $D_{50}$ herein is preferably small in general, but when the particle diameter is extremely small, the material may become coarse due to aggregation. $D_{50}$ refers to a particle size at which the integrated value of the volume distribution in the particle size distribution measurement by a laser diffraction method corresponds to 50%, that is, a median diameter measured on the volume basis. The particle diameter of the alloy material (A) $D_{50}$ is preferably 1 $\mu$m to 40 $\mu$m, more preferably 2 $\mu$m to 30 $\mu$m.

Examples of the alloy material containing silicon as a constituent element (A) include (i) silicon particulates, (ii) alloys of tin, nickel, copper, iron, cobalt, manganese, zinc, indium, silver, titanium, germanium, bismuth, antimony, or chromium with silicon, (iii) compounds of boron, nitrogen, oxygen, or carbon with silicon, and (iv) composite materials of a metal exemplified in (ii) above with a silicon compound exemplified in (iii) above.

Specific examples of the alloy material containing silicon as a constituent element (A) include $SiB_4$, $SiB_6$, $Mg_2Si$, $Ni_2Si$, $TiSi_2$, $MoSi_2$, $CoSi_2$, $NiSi_2$, $CaSi_2$, $CrSi_2$, $Cu_sSi$, $FeSi_2$, $MnSi_2$, $NbSi_2$, $TaSi_2$, $VSi_2$, $WSi_2$, $ZnSi_2$, SiC, $Si_3N_4$, $Si_2N_2O$,

$SiO_x$ ($0.5 \leq x \leq 1.5$), and LiSiO.

Meanwhile, examples of the alloy material containing tin as a constituent element (A) include (i) alloys of silicon, nickel, copper, iron, cobalt, manganese, zinc, indium, silver, titanium, germanium, bismuth, antimony, or chromium with tin, (ii) compounds of oxygen or carbon with tin, (iii) composite materials of a metal exemplified in (i) above with a tin compound exemplified in (ii) above.

Specific examples of the alloy material containing tin as a constituent element (A) include $SnO_w$ ($0 < w \leq 2$), $SnSiO_3$, LiSnO, and $Mg_2Sn$.

The alloy material (A) may contain only one alloy or compound containing silicon or tin or may contain two or more of these. The surface of these may be coated with a carbon material or the like.

Of those described above, preferred examples of the alloy material (A) include silicon oxides represented by $SiO_x$ ($0.5 \leq x \leq 1.5$). In the present invention, $SiO_x$ ($0.5 \leq x \leq 1.5$) is a general formula indicating the generic formula of amorphous silicon oxides obtained from silicon dioxide ($SiO_2$) and metal silicon (Si) as the raw materials. When x is less than 0.5 in $SiO_x$ ($0.5 \leq x \leq 1.5$), the volume change during charging/discharging increases due to an increase in the proportion of the Si phase, and the cycle performance of the lithium-ion secondary cell may deteriorate. When x exceeds 1.5, the proportion of Si phase may decrease to lead to a decrease in the energy density. A more preferred range of x is $0.7 \leq x \leq 1.2$.

Methods for predoping the alloy material (A) containing silicon or tin described above with an alkali metal or alkaline earth metal before energization are not particularly limited. As explained in a method for producing a negative electrode for a lithium-ion secondary cell described below, particularly preferred is a method in which, after production of an active material-containing layer including an alloy material (A) and carbon particles (B) bound by an imide-bond containing polymer (C) onto a collector, the active material-containing layer is predoped by bringing the layer into contact with an alkali metal or alkaline earth metal in the presence of a polycyclic aromatic compound.

At least a portion of $SiO_x$ ($0.5 \leq x \leq 1.5$) may be coated with carbon. When the $SiO_x$ ($0.5 \leq x \leq 1.5$) has been coated and made electrically conductive with carbon, the deposition amount of the carbon in the composite is preferably 2 to 50 mass%, more preferably 3 to 40 mass%, still more preferably 3 to 25 mass% based on the mass of $SiO_x$ ($0.5 \leq x \leq 1.5$). When the deposition amount of the carbon is 2 mass% or more, $SiO_x$ ($0.5 \leq x \leq 1.5$) has sufficient electrical conductivity, and the power collection efficiency of the negative electrode is likely to increase. Meanwhile, with an excessive deposition amount of the carbon, when the negative electrode is used in a lithium-ion secondary cell, the capacity of the lithium-ion secondary cell may decrease. When the deposition amount of the carbon is 50 mass% or less, the capacity is less likely to be influenced.

The electrical conductivity of the $SiO_x$ ($0.5 \leq x \leq 1.5$) made electrically conductive is preferably $1 \times 10^{-6}$ S/m or more, more preferably $1 \times 10^{-4}$ S/m or more. The electrical conductivity referred to herein is a value determined by filling a cylindrical cell having four terminals with a powder to be measured and measuring the voltage drop when an electrical current is applied to this powder.

(Carbon Particles (B))

The carbon particles (B) are particles that usually contain a graphite material and materials that function as a negative electrode active material (absorb and desorb lithium).

The content of the carbon particles (B) in the negative electrode-mixture layer is preferably more than 30 vol% and 93 vol% or less, more preferably 35 to 85 vol%, still more preferably 50 to 85 vol% based on 100 vol% of the total volume of the alloy material (A) and the carbon particles (B). As aforementioned, when the contents of the alloy material (A) and the carbon particles (B) are within the range, the amount of an alkali metal or alkaline earth metal predoped in the active material (the alloy material (A) and carbon particles (B)) before energization significantly increases. As aforementioned, the volume ratio of the carbon particles (B) is calculated by the method.

The particle diameter $D_{50}$ of the carbon particles (B) herein is not particularly limited and usually 1 $\mu$m or more. $D_{50}$ refers to a particle size at which the integrated value of the volume distribution in the particle size distribution measurement by a laser diffraction method corresponds to 50%, that is, a median diameter measured on the volume basis. The ratio of the particle diameter $D_{50}$ of the carbon particles (B) to that of the alloy material (A) is preferably 1 to 8.0, more preferably 1.5 to 6.5, still more preferably more than 2 and less than 6.0. Setting the particle diameter $D_{50}$ of the carbon particles (B) to equal to or greater than the particle diameter $D_{50}$ of the alloy material (A) leads to a reduction in the volume change in the negative electrode-mixture layer associated with the charge/discharge cycle, allowing the negative electrode-mixture layer to become less likely to exfoliate and the like. Meanwhile, when the above ratio is 8.0 or less, the specific surface area of the carbon particles (B) does not increase excessively, and a reduction in the capacity due to decomposition of the electrolyte solution becomes less likely to occur.

The carbon particles (B) are not particularly limited. Specific examples include natural graphite, artificial graphite, hardly graphitizable carbon (hard carbon), easily graphitizable carbon (soft carbon), mesocarbon microbeads, particles formed of graphite particles and carbonaceous layer existing on the surface of the particles (i.e., carbon-coated graphite),

and particles obtained by attaching carbon fiber onto graphite particles. The shape of the carbon particles (B) may be any shape such as spherical, approximately spherical, and flat shapes. In the present invention, particles having an aspect ratio less than 10 are used as the carbon particles (B).

The carbon particles (B) preferably contain any of natural graphite, artificial graphite, or carbon-coated graphite of those described above, from the viewpoint that the negative electrode, after predoped with an alkali metal or alkaline earth metal, can maintain high charge/discharge efficiency even after left in dry air for 24 hours.

The carbon particles (B) herein preferably has a total pore volume, measured by the nitrogen gas adsorption method, of $1.0 \times 10^{-2}$ to $1.0 \times 10^{-1}$ $cm^3/g$ and an average pore diameter of 20 to 50 nm. The total pore volume and the average pore diameter are respectively, preferably $1.5 \times 10^{-2}$ to $9.0 \times 10^{-2}$ $cm^3/g$ and 25 to 40 nm, more preferably $2.0 \times 10^{-2}$ to $7.0 \times 10^{-2}$ $cm^3/g$ and 25 to 35 nm. When the total pore volume and the average pore diameter of the carbon particles (B) fall within the above ranges, the electrolyte solution becomes likely to penetrate the active material in use of the negative electrode in the lithium-ion secondary cell, and thus satisfactory ionic conductivity is retained. In other words, electrode resistance is limited, and the charge/discharge capacity and load characteristics of the cell are improved. Additionally, since the carbon particles (B) have pores, the carbon particles (B) are elastically deformed to prevent deformation of the mixture layer even if the volume of the alloy material (A) expands during charging. As a result, the negative electrode-mixture layer is less likely to exfoliate from the collector, and satisfactory cycle performance is likely to be maintained. Incidentally, at least one of the particle diameter $D_{50}$ and the total pore volume of the carbon particles (B) described above preferably falls within the range aforementioned.

The carbon particles (B) are more preferably secondary aggregates where primary particles including the graphite material are aggregated or bonded. In this case, the primary particles of the carbon particles (B) preferably have a flat shape. When the carbon particles (B) have such a shape, satisfactory electrical conductivity is likely to be maintained even after the charge/discharge cycle, and an increase in the electrode resistance is likely to be prevented. As a result, it is possible to extend the cycle life of the lithium-ion secondary cell. An example of the carbon particles (B) formed of flat primary particles includes MAG™.

(Imide-Bond Containing Polymer (C))

The imide-bond containing polymer (C) is a polymer that functions as a binding agent in the negative electrode-mixture layer. The content of the imide-bond containing polymer (C) contained in the negative electrode-mixture layer is 3 mass% or more and 13 mass% or less, more preferably 4 to 10 mass% based on the mass of the negative electrode-mixture layer. When the content of the imide-bond containing polymer (C) is 3 mass% or more, the imide-bond containing polymer (C) sufficiently binds the alloy material (A) and the carbon particles (B), which are the active material. Meanwhile, when the content of the imide-bond containing polymer (C) is 13 mass% or less, the amount of the alkali metal or alkaline earth metal predoped in the active material increases. Although the reason is not clear, it is assumed that the alloy material (A) and the carbon particles (B), which are the active material, are not completely coated with the imide-bond containing polymer (C). The alloy material (A) and the carbon particles (B) are partly exposed to thereby allow the active material to become likely to be predoped with an alkali metal or alkaline earth metal. The content of the above imide-bond containing polymer (C) can be calculated from the amount of charged when the negative electrode-mixture layer is prepared, thermogravimetric measurement of the negative electrode (TGA), the amount of nitrogen determined by quantification on the imide-bond containing polymer, extracted from the negative electrode using acid alkali and the like, by liquid chromatography-mass spectrometry (LC-MS), and the like.

The imide-bond containing polymer (C) is not particularly limited as long as the polymer contains an imide bond in the molecule. Examples of the imide-bond containing polymer include polyimide and polyamideimide. The imide-bond containing polymer (C) preferably contains repeating constituent units having an amide acid structure or an imide bond formed by reaction of a diamine compound with a tetracarboxylic dianhydride. The imide-bond containing polymer (C) may contain one type of the repeating constituent unit or may contain two or more types of these. In other words, the imide-bond containing polymer (C) may be a homopolymer or a copolymer.

In the imide-bond containing polymer (C) containing the above repeating constituent units, the molecular weight of the repeating constituent unit is preferably 600 or less, more preferably 500 or less. When the imide-bond containing polymer (C) contains two or more types of repeating constituent units, the average molecular weight of these repeating constituent units is preferably 600 or less. With a molecular weight of the repeating constituent unit of 600 or less, when the negative electrode is predoped with lithium, the imide-bond containing polymer (C) becomes less likely to swell, and thus exfoliation of the negative electrode-mixture layer from the collector or the like is prevented.

The diamine compound constituting the above repeating constituent unit preferably contains 50 mol% or more of, more preferably 70 mol% or more of a low-molecular-weight diamine compound having a molecular weight of 300 or less based on the total amount of the diamine compound. When the diamine compound is a low-molecular-weight diamine compound, the molecular weight of the aforementioned repeating constituent unit is likely to be small.

The imide-bond containing polymer (C) is, in particular, preferably a polyimide having constituent units represented by the following general formula (1). Such a polyimide having constituent units represented by the following general formula (1) contains a relatively large number of aromatic rings in the molecule and has a rigid molecular structure, thus having a high elastic modulus and a low thermal expansion coefficient. Accordingly, the volume of the negative electrode-mixture layer becomes less likely to change, and the negative electrode-mixture layer becomes less likely to exfoliate from the collector.

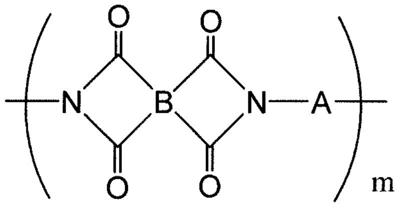

Formula (1)

In the above general formula (1), m is an integer of 1 or more. A in the general formula (1) is selected from divalent groups represented by the following formula or divalent aliphatic diamines.

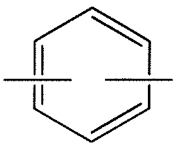

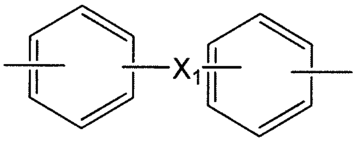

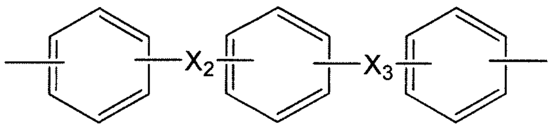

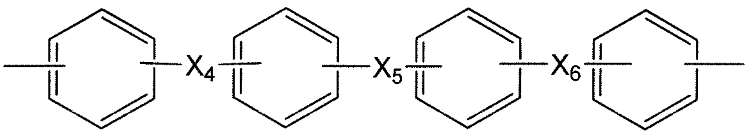

In the above formula, $X_1$ to $X_6$ are each a single bond, -O-, -S-, -CO-, -COO-, $-C(CH_3)_2-$, $-C(CF_3)_2-$, $-SO_2-$, or -NHCO-. When one molecule contains a plurality of groups represented by the above formula, $X_1$ to $X_6$ may be the same or different from each other.

A in the general formula (1) may be a divalent group derived from a diamine compound. Examples of the diamine compound include aromatic diamine such as m-phenylenediamine, o-phenylenediamine, p-phenylenediamine, 3,3 '-diaminodiphenyl ether, 3,4'-diaminodiphenyl ether, 4,4'-diaminodiphenyl ether, 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 3,3'-diaminodiphenyl methane, 3,4'-diaminodiphenyl methane, 4,4'-diaminodiphenyl methane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenyl sulfoxide, 3,4'-diaminodiphenyl sulfoxide, 4,4'-diaminodiphenyl sulfoxide, 1,3 -bis(3 -aminophenyl)benzene, 1,3 -bis(4-aminophenyl)benzene, 1,4-bis(3-aminophenyl)benzene, 1,4-bis(4-aminophenyl)benzene, 1,3-bis(3-aminophenoxy)benzene, 1,3-bis(4-aminophenoxy)benzene, 1,4-bis(3-aminophenoxy)benzene, 1,4-bis(4-aminophenoxy)benzene, 1,3-bis(3-aminophenyl sulfide)benzene, 1,3-bis(4-aminophenyl sulfide)benzene, 1,4-bis(4-aminophenyl sulfide)benzene, 1,3-bis(3-aminophenyl sulfone)benzene, 1,3-bis(4-aminophenyl sulfone)benzene, 1,4-bis(4-aminophenyl sulfone)benzene, 1,3-bis(3-aminobenzyl)benzene, 1,3-bis(4-aminobenzyl)benzene, 1,4-bis(4-aminobenzyl)benzene, 1,3-bis(3-amino-4-phenoxybenzoyl)benzene, 3,3 '-bis(3 -aminophenoxy)biphenyl, 3,3 '-bis(4-aminophenoxy)biphenyl, 4,4'-bis(3-aminophenoxy)biphenyl, 4,4'-bis(4-aminophenoxy)biphenyl, bis[3 -(3 -aminophenoxy)phenyl] ether, bis[3 -(4-aminophenoxy)phenyl]ether, bis[4-(3-aminophenoxy)phenyl] ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy)phenyl]ketone, bis[4-(4-aminophenoxy)phenyl]ketone, bis[3 -(3-aminophenoxy)phenyl] sulfide, bis[3-(4-aminophenoxy)phenyl] sulfide, bis[4-(3-aminophenoxy)phenyl] sulfide, bis[4-(4-aminophenoxy)phenyl] sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis[4-(4-aminophenoxy)phenyl]methane, 2,2-bis[3-(3-aminophenoxy)phenyl]propane, 2,2-bis[3-(4-aminophenoxy)phenyl]propane, 2,2-bis[4-(3-aminophenoxy)phenyl]propane, 2,2-bis[4-(4-aminophenoxy)phenyl]propane, 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, 2,2-bis[4-(4-aminophenoxy)phenyl]-1,1,1,3,3,3-hexafluoropropane, 9,9-bis(4-aminophenyl)fluorene, 9,9-bis(2-methyl-4-aminophenyl)fluorene, 9,9-bis(3-methyl-4-aminophenyl)fluorene, 9,9-bis(2-ethyl-4-aminophenyl)fluorene, 9,9-bis(3-ethyl-4-aminophenyl)fluorene, 9,9-bis(4-aminophenyl)-1-methylfluorene, 9,9-bis(4-aminophenyl)-2-methylfluorene, 9,9-bis(4-aminophenyl)-3-methylfluorene and 9,9-bis(4-aminophenyl)-4-methylfluorene, and 4,4'-diaminobenzanilide; and aliphatic diamines such as 1,3-bis(3-aminopropyl)tetramethyldisiloxane, 1,3-bis(4-aminobutyl)tetramethyldisiloxane, $\alpha,\omega$-bis(3-aminopropyl)polydimethylsiloxane, $\alpha,\omega$-bis(3-aminobutyl)polydimethylsiloxane, bis(aminomethyl)ether, 1,2-bis(aminomethoxy)ethane, bis[(2-aminomethoxy)ethyl]ether, 1,2-bis[(2-aminomethoxy)ethoxy]ethane, bis(2-aminoethyl)ether, 1,2-bis(2-aminoethoxy)ethane, bis[2-(2-aminoethoxy)ethyl]ether, bis[2-(2-aminoethoxy)ethoxy] ethane, bis(3-aminopropyl)ether, ethylene glycol bis(3-aminopropyl)ether, diethylene glycol bis(3-aminopropyl)ether, triethylene glycol bis(3-aminopropyl)ether, ethylenediamine, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, 1,11-diaminoundecane, 1,12-diaminododecane, 1,2-diaminocyclohexane, 1,3-diaminocyclohexane, 1,4-diaminocyclohexane, 1,4-diaminomethylcyclohexane, 1,3-diaminomethylcyclohexane, 1,2-diaminomethylcyclohexane, 1,2-di(2-aminoethyl)cyclohexane, 1,3-di(2-aminoethyl)cyclohexane, 1,4-di(2-aminoethyl)cyclohexane, bis(4-aminocyclohexyl)methane, 2,6-bis(aminomethyl)bicyclo[2.2.1]heptane, and 2,5-bis(aminomethyl)bicyclo[2.2.1]heptane. One structure derived from these may be contained singly or two or more of these structures may be contained in the polyimide.

B in the general formula (1) is selected from quadrivalent groups represented by the following formulas.

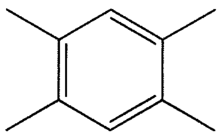
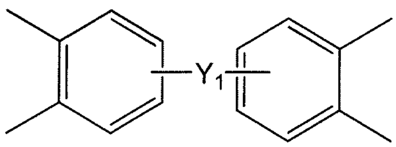

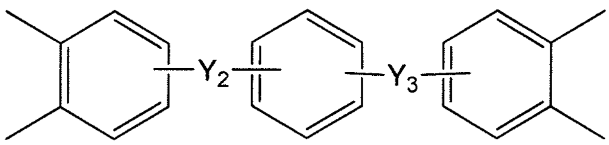

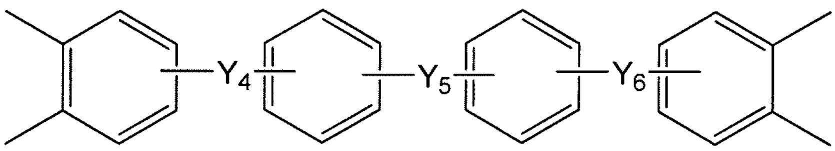

$Y_1$ to $Y_6$ in the above formulas are each a single bond, -O-, -S-, -CO-, -COO-, $-C(CH_3)_2-$, $-C(CF_3)_2-$, $-SO_2-$, or -NHCO-. When one molecule contains a plurality of groups represented by B, these may be the same or different from each other.

B in the general formula (1) may be a quadrivalent group derived from an aromatic tetracarboxylic dianhydride. Examples of the aromatic tetracarboxylic dianhydride include pyromellitic dianhydride, mellophanic dianhydride, 3,3',4,4'-biphenyltetracarboxylic dianhydride, 2,3,3',4'-biphenyltetracarboxylic dianhydride, 2,2',3,3'-biphenyltetracarboxylic dianhydride, 3,3',4,4'-benzophenone tetracarboxylic dianhydride, bis(3,4-dicarboxyphenyl)ether dianhydride, bis(2,3-dicarboxyphenyl)ether dianhydride, bis(3,4-dicarboxyphenyl)sulfide dianhydride, bis(3,4-dicarboxyphenyl)sulfone dianhydride, bis(3,4-dicarboxyphenyl)methane dianhydride, 2,2-bis(3,4-dicarboxyphenyl)propane dianhydride, 2,2-bis(3,4-dicarboxyphenyl)-1,1,1,3,3,3 -hexafluoropropane dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, and 2,2-bis[(3,4-dicarboxyphenoxy)phenyl]propane dianhydride. Of these, pyromellitic dianhydride and 3,3',4,4'-biphenyltetracarboxylic dianhydride are preferred, and 3,3',4,4'-biphenyltetracarboxylic dianhydride is particularly preferred. One structure derived from these may be contained singly or two or more of these structures may be contained in the polyimide.

A quadrivalent group derived from other tetracarboxylic dianhydrides may be contained in a portion of the polyimide. Examples of the other tetracarboxylic dianhydride include ethylenetetracarboxylic dianhydride, butanetetracarboxylic dianhydride, cyclopentanetetracarboxylic dianhydride, 1,1-bis(2,3-dicarboxyphenyl)ethane dianhydride, 1,1-bis(3,4-dicarboxyphenyl)ethane dianhydride, 1,2-bis(2,3-dicarboxyphenyl)ethane dianhydride, 1,2-bis(3,4-dicarboxyphenyl)ethane dianhydride, 1,2,5,6-naphthalenetetracarboxylic dianhydride, 3,4,9,10-perylenetetracarboxylic dianhydride, 2,3,6,7-anthracenetetracarboxylic dianhydride, and 1,2,7,8-phenanthrenetetracarboxylic dianhydride. Alternatively, the hydrogen atoms on aromatic rings of other tetracarboxylic dianhydride may be partially or wholly replaced by a fluoro group or trifluoromethyl group. One structure derived from these may be contained singly or two or more of these structures may be contained in the polyimide.

The weight average molecular weight of the imide-bond containing polymer (C) herein is preferably $5.0 \times 10^3$ to $5.0 \times 10^5$. When the weight average molecular weight is less than $5.0 \times 10^3$, the mechanical strength of the negative electrode-mixture layer may be reduced. When the weight average molecular weight exceeds $5.0 \times 10^5$, it is likely to become difficult to form the negative electrode-mixture layer. The weight average molecular weight of the imide-bond containing polymer (C) may be measured by gel permeation chromatography (GPC).

The imide-bond containing polymer (C) contained in the negative electrode-mixture layer has a mass change (degree of swelling) of preferably less than 5 mass%, more preferably 3 mass% or less, when a film having a film thickness of 20 μm made of the imide-bond containing polymer is immersed in tetrahydrofuran at 60°C for 24 hours. With a degree of swelling of less than 5 mass%, when the negative electrode active material is predoped with an alkali metal or alkaline earth metal by a process described in the method for producing a lithium-ion secondary cell described below, the negative electrode-mixture layer becomes less likely to exfoliate. In order to lower the degree of swelling, it is preferred that the amount of 3,3',4,4'-biphenyltetracarboxylic dianhydride be 50 mass% or more based on the total amount of the tetracarboxylic dianhydride and that the film having a film thickness of 20 μm made of the imide-bond containing polymer have a tensile modulus of 3 GPa or more.

(Polycyclic Aromatic Compound (D))

The negative electrode-mixture layer contains a polycyclic aromatic compound (D). The polycyclic aromatic compound (D) is a compound that functions as a catalyst when the alloy material (A) and the carbon particles (B) are predoped with an alkali metal or alkaline earth metal, as described in the method for producing a negative electrode for a lithium-ion secondary cell. In other words, the polycyclic aromatic compound (D) is introduced into the negative electrode-mixture layer when the alkali metal or alkaline earth metal is predoped. Inclusion of the polycyclic aromatic compound (D) in the negative electrode-mixture layer means that the negative electrode has been predoped by an immersion method.

The polycyclic aromatic compound (D) has a structure in which two or more aromatic hydrocarbon rings are fused. The polycyclic aromatic compound (D) preferably contains 10 to 30 carbon atoms. Examples of the polycyclic aromatic compound include bicyclic aromatic compounds such as azulene, naphthalene, biphenylene, 1-methylnaphthalene, and sapotalin; tricylic aromatic compounds such as acenaphthene, acenaphthylene, anthracene, fluorene, phenalene, and phenanthrene; tetracyclic aromatic compounds such as benzanthracene (benz[a]anthracene), benzo[a]fluorene, benzo[c]phenanthrene, chrysene, fluoranthene, pyrene, tetracene, and triphenylene; pentacyclic aromatic compounds such as benzopyrene, benzo[a]pyrene, benzo[e]pyrene, benzo[a]fluoranthene, benzo[b]fluoranthene, benzo[j]fluoranthene, benzo[k]fluoranthene, dibenz[a,h] anthracene, dibenz[a,j]anthracene, pentacene, perylene, picene, and tetraphenylene; and hexacyclic aromatic hydrocarbons such as anthanthrene, 1,12-benzoperylene, circulene, corannulene, coronene, dicoronylene, diindenoperylene, helicene, heptacene, hexacene, kekulene, ovalene, and zethrene.

In the case of a single-sided electrode, the polycyclic aromatic compound (D) is contained in an amount of preferably 0.005 to 20 μg, more preferably 0.005 to 10 μg, still more preferably 0.005 to 5 μg per electrode area ($cm^2$). In a case of double-sided electrode, the polycyclic aromatic compound (D) is contained in an amount of preferably 0.01 to 40 μg, more preferably 0.01 to 20 μg, still more preferably 0.01 to 10 μg per electrode area ($cm^2$). With a large amount of the polycyclic aromatic compound (D) present, the internal resistance of the cell may increase, or the initial characteristics and load characteristics may decrease when the negative electrode is used in the lithium-ion secondary cell. In contrast, provided that the amount of the polycyclic aromatic compound (D) is within the above range, the polycyclic aromatic compound is less likely to affect the characteristics of the cell, and thus, the cell characteristics become likely to be stabilized.

The content of the polycyclic aromatic compound (D) can be measured by gas chromatography (GC). Specifically, the content can be checked in accordance with the following procedure.

1) The polycyclic aromatic compound (D) in the negative electrode-mixture layer is identified by gas chromatography (GC). Then, a plurality of liquid samples of the identified polycyclic aromatic compound (D) each having a different concentration of compound (D) is prepared and subjected to gas chromatography (GC) measurement under measurement conditions described below to obtain a calibration curve.
2) Then, the negative electrode-mixture layer to be measured is placed in a vial bottle. 1 mL of an extraction solvent in which the polycyclic aromatic compound (D) is soluble is added to the bottle, and the layer is immersed in the solvent for 30 minutes. This vial is set on an ultrasonic cleaner VS-D100 (manufactured by AS ONE Corporation), and the vial is irradiated with a composite frequency of 24 kHz and 31 kHz for three minutes.
3) The obtained extraction solvent was analyzed by gas chromatography (GC) to quantify the polycyclic aromatic compound (D) in the extraction solvent by comparison with the calibration curve aforementioned.

Gas chromatography (GC) can be carried out under the following conditions, for example.

Measurement apparatus name: Agilent 7890A/5975C GC/MSD
Column: Agilent J & W HP-5MS length 60 m, inner diameter 0.25 mm, film thickness 0.25 μm
Heating conditions: 40°C (retention: 3 minutes) - temperature rise at 20°C/minute - 300°C (retention: 14 minutes)
Carrier gas: helium
Detector: MSD (mass selective detector)

As the above extraction solvent, there is no limitation as long as the polycyclic aromatic compound (D) is soluble in the solvent, and a low boiling point solvent that easily vaporizes is preferred. An example of such an extraction solvent includes acetone.

(Conductive additive (E))

As aforementioned, the negative electrode-mixture layer of the negative electrode of the present invention may further include a conductive additive (E). Such a conductive additive (E) is not particularly limited as long as it causes no chemical reaction in a non-aqueous secondary cell. Examples of the conductive additive that can be used include materials such as carbon fiber having an aspect ratio of 10 or more, carbon black (such as thermal black, furnace black, channel black, ketchen black, and acetylene black), metal powder (such as powder of copper, nickel, aluminum, silver), metal fiber, and a polyphenylene derivative.

The conductive additive (E) preferably contains carbon fiber having an aspect ratio of 10 to 1,000. The aspect ratio of the carbon fiber is more preferably 10 to 500. Combination of such carbon fiber with the aforementioned carbon particles (B) is likely to lead to improvement in the capacity and cycle life when the negative electrode is used in the lithium-ion secondary cell.

The method for producing carbon fiber is not particularly limited. For example, there are a method involving spinning a polymer into fiber and heating under an inert atmosphere; and a vapor phase growth method in which an organic compound is reacted at high temperature in the presence of a catalyst. In the carbon fiber obtained by the vapor growth method, the so-called vapor grown carbon fiber, a growth direction of the crystal is roughly in parallel with the fiber axis and, therefore, crystallinity of a graphite structure is likely to become high in a fiber length direction and a carbon fiber having a relatively short fiber diameter, relatively high conductivity, and a relatively high strength is obtained.

In the negative electrode-mixture layer, the content of the conductive additive (E) is preferably 0.01 mass% or more, more preferably 0.05 mass% or more, still more preferably 0.1 mass% or more. The content is usually preferably 20 mass% or less, more preferably 10 mass% or less.

(Physical Properties of Negative Electrode-Mixture Layer)

The thickness of the negative electrode-mixture layer is not particularly limited and, for example, is preferably 5 μm or more, more preferably 10 μm or more. The thickness is also preferably 200 μm or less, more preferably 100 μm or less, still more preferably 75 μm or less. With a thickness of the negative electrode-mixture layer within the above range, a function of sufficiently absorbing and desorbing lithium is likely to be achieved upon charging and discharging at a high charge/discharge rate.

The density of the active material (the alloy material (A) and carbon particles (B)) contained in the negative electrode-mixture layer is preferably 1.1 g/cm$^3$ to 1.7 g/cm$^3$, more preferably 1.2 g/cm$^3$ to 1.5 g/cm$^3$, still more preferably 1.2 g/cm$^3$ to 1.4 g/cm$^3$. With a density of the active material in the negative electrode-mixture layer of 1.1 g/cm$^3$ or more, the volume energy density of the cell is likely to sufficiently increase. With a density of 1.6 g/cm$^3$ or less, the cycle performance is likely to increase.

Furthermore, when the negative electrode-mixture layer is formed each on the both faces of the collector, the amount of the active material (the alloy material (A) and carbon particles (B)) contained in a unit area of one side of the negative electrode-mixture layer is 2 to 10 mg/cm$^2$, more preferably 3 to 8 mg/cm$^2$.

1-2. Collector

The material of the collector in the negative electrode may be a metal material such as silicon and/or a silicon alloy, tin and a tin alloy, a silicon-copper alloy, copper, nickel, stainless steel, nickel-plated steel; or a carbon material such as carbon cloth and carbon paper.

The shape of the collector of the negative electrode is appropriately selected depending on applications of the lithium-ion secondary cell. For example, when the collector is made of a metal material, the collector may be in the form of a foil, column, coil, plate, a thin film or the like. Meanwhile when the collector is made of a carbon material, the collector may be in the form of a plate, thin film, column or the like. The thickness of the collector is not particularly limited, and is usually about 5 μm to 30 μm, preferably 6 to 20 μm. In addition, the surface of the collector may be roughened by

chemical treatment or physical treatment, or coated with a conductive material such as carbon black and acetylene black.

2. Method for Producing Negative Electrode for Lithium-Ion Secondary Cell

The method for producing a negative electrode for a lithium-ion secondary cell of the present invention includes forming a negative electrode-mixture layer by bringing an active material-containing layer including an alloy material (A), carbon particles (B), and an imide-bond containing polymer (C) on a collector into contact with lithium in the presence of a polycyclic aromatic compound to predope the alloy material (A) and the carbon particles (B) with an alkali metal and/or an alkaline earth metal. The method for producing a negative electrode for a lithium-ion secondary cell of the present invention may include forming an active material-containing layer for predoping of an alkali metal and/or an alkaline earth metal. Additionally, the method may include removing impurities from the negative electrode-mixture layer predoped with the alkali metal and/or the alkaline earth metal and the like. Each procedure will be described below.

2-1. Forming Active Material-Containing Layer

An active material-containing layer can be obtained by dispersing the aforementioned alloy material (A), carbon particles (B), imide-bond containing polymer (C) or precursor thereof (for example, an polyamide acid), conductive additive and the like into a solvent to prepare a negative electrode mixture paste and applying this paste onto a collector. After application of the negative electrode mixture paste, the solvent is removed or the precursor of the imide-bond containing polymer (C) is allowed to react (for example, the polyamide acid is imidized) as required to dry and solidify the negative electrode mixture paste.

The solvent that can be used for the negative electrode mixture paste is not particularly limited as long as the solvent can homogeneously dissolve or disperse the alloy material (A), carbon particles (B), imide-bond containing polymer (C) or precursor thereof, and is preferably an aprotic polar solvent, more preferably an aprotic amide solvent. Examples of the aprotic amide solvent include N,N-dimethylformamide, N,N-dimethylacetamide, N,N-diethylacetamide, N-methyl-2-pyrrolidone, and 1,3-dimethyl-2-imidazolidinone. These solvent may be used singly or two more of these solvents may be combined.

In addition to these solvents, additional solvent(s) may coexist as required. Examples of additional solvents include benzene, toluene, o-xylene, m-xylene, p-xylene, mesitylene, 1,2,4-trimethylbenzene, o-cresol, m-cresol, p-cresol, o-chlorotoluene, m-chlorotoluene, p-chlorotoluene, o-bromotoluene, m-bromotoluene, p-bromotoluene, chlorobenzene, bromobenzene, methanol, ethanol, n-propanol, isopropyl alcohol, and n-butanol.

The amount of the solvent in the negative electrode mixture paste is appropriately set in consideration of the viscosity of the negative electrode mixture paste and the like. The above amount of the solvent to be blended is preferably 50 to 900 parts by mass, more preferably 65 to 500 parts by mass based on 100 parts by mass of the solid content contained in the mixture paste.

The negative electrode mixture paste may be applied by a known method such as screen printing, roll coating, slit coating and the like. In this case, the mixture paste for a negative electrode may be applied in a pattern. For example, a mesh-like active material-containing layer may be formed.

The applied negative electrode mixture paste can be dried by heat curing, for example. Heat curing may be carried out usually under atmospheric pressure, but may be carried out under pressure or under vacuum. The atmosphere for heat drying is not particularly limited. Usually, heat drying is carried out preferably under an atmosphere of air, nitrogen, helium, neon, argon or the like, more preferably under an atmosphere of nitrogen or argon, which is an inert gas. The negative electrode mixture paste is heat cured usually at a heating temperature of 150°C to 500°C for one minute to 24 hours. When the imide-bond containing polymer precursor contained in the negative electrode mixture paste is a polyamide acid or the like, the paste is preferably heated at 200°C to 350°C for one minute to 20 hours in order for sufficient imidation.

2-2. Predoping

The active material-containing layer containing at least the aforementioned alloy material (A), carbon particles (B), and the imide-bond containing polymer (C) is brought into contact with an alkali metal and/or an alkaline earth metal in the presence of a polycyclic aromatic compound to predope the aforementioned active material-containing layer with the alkali metal and/or the alkaline earth metal. That is, a negative electrode predoped with the alkali metal and/or the alkaline earth metal is obtained. The method including bringing an alkali metal or alkaline earth metal into contact with the above active material-containing layer in the presence of a polycyclic aromatic compound is not particularly limited, and these are preferably brought into contact with each other in a solvent. When an alkali metal or alkaline earth metal and a polycyclic aromatic compound are dissolved in a solvent, electrons transfer from the alkali metal or alkaline earth metal to the polycyclic aromatic compound, and anions of the polycyclic aromatic compound and alkali metal ions (for

example, lithium ions) or alkaline earth metal ions are formed. Then, when the aforementioned active material-containing layer is brought into contact with the solution, electrons transfers from the anions of the polycyclic aromatic compound to the active material-containing layer side, and the aromatic compound anions return to the polycyclic aromatic compound. Meanwhile, the negative electrode active material (the alloy material (A) and carbon particles (B)) that has received electrons reacts with the alkali metal ions or alkaline earth metal ions to predope the negative electrode with the alkali metal or alkaline earth metal.

The concentration of lithium in the above solution is preferably 0.07 g/L or more and the saturating concentration or less from the viewpoint that the predoping efficiency of the alkali metal or alkaline earth metal is improved. Meanwhile the concentration of the polycyclic aromatic compound in the above solution is preferably 0.005 to 4.0 mol/L, more preferably 0.005 to 1 mol/L, still more preferably 0.005 to 0.25 mol/L. With a concentration of the polycyclic aromatic compound of less than 0.005 mol/L, predoping with the alkali metal or alkaline earth metal is likely to require a longer time. Meanwhile, with a concentration of more than 4.0 mol/L, the polycyclic aromatic compound is likely to precipitate in the solution.

The time during which the above solution and the active material-containing layer are in contact with each other is not particularly limited. However, in order to sufficiently predope the negative electrode active material (the alloy material (A) and carbon particles (B)) with an alkali metal or alkaline earth metal, the contact time is preferably 0.5 minutes or more, more preferably 0.5 minutes to 240 hours, still more preferably 0.5 minutes to 72 hours.

When the negative electrode is immersed in the solution, the rate of predoping with an alkali metal or alkaline earth metal can be increased by allowing the solution to flow by stirring or the like. At a higher temperature of the solution, the rate of predoping can be increased, but in order to prevent the solution from boiling, the temperature is preferably equal to or less than the boiling point of the solution.

The polycyclic aromatic compound may be the aforementioned polycyclic aromatic compound (D). Meanwhile, the type of the solvent for dissolving the above alkali metal or alkaline earth metal and the polycyclic aromatic compound is not particularly limited as long as the solvent is likely to solvate lithium. For example, the solvent may be a cyclic carbonate ester, cyclic ester, chain ester, cyclic ether, chain ether, nitriles or the like.

Examples of the cyclic carbonate ester include propylene carbonate, ethylene carbonate, and dimethyl sulfoxide (DMSO). Examples of the cyclic ester include γ-butyrolactone, γ-valerolactone, γ-caprolactone, 8-hexanolactone, and δ-octanolactone. Examples of the chain ester include dimethyl carbonate (DMC), diethyl carbonate, and ethylmethyl carbonate. Examples of the cyclic ether include oxetane, tetrahydrofuran, and tetrahydropyrane. Examples of the chain ether include dimethoxyethane, ethoxymethoxyethane, and diethoxyethane. Examples of the nitriles include acetonitrile, propionitrile, glutaronitrile, methoxyacetonitrile, and 3-methoxypropionitrile. The above solvent also may be hexamethylsulphortriamide, acetone, N-methyl-2-pyrrolidone, dimethylacetamide, pyridine, dimethylformamide, ethanol, formamide, methanol, water or the like. The solvent may include one of these singly or may include two or more of these.

2-3. Removing Impurities from Predoped Negative Electrode

In this removing, the polycyclic aromatic compound is removed from the negative electrode-mixture layer by immersing the negative electrode-mixture layer obtained in the aforementioned predoping in a solvent in which the polycyclic aromatic compound is soluble. According to this removing, the polycyclic aromatic compound is removed from the negative electrode predoped with the alkali metal or alkaline earth metal (also referred to as the "predoped negative electrode" hereinbelow) to reduce impurities in the predoped negative electrode to thereby improve the stability of the lithium-ion secondary cell.

Examples of the solvent in which the polycyclic aromatic compound is soluble may include the aforementioned cyclic carbonate esters, cyclic esters, chain esters, cyclic ethers, chain ethers, and nitriles. The time for immersing the negative electrode-mixture layer in the solvent is not particularly limited and is usually five seconds or more, preferably 10 seconds to 10 hours. After immersion in the solvent, the solvent is sufficiently vaporized to thereby provide a stable negative electrode for a lithium-ion secondary cell. When the negative electrode-mixture layer is immersed in a solution, the polycyclic aromatic compound becomes likely to be removed by allowing the solution to flow or to microvibrate by ultrasonics or the like, and thus the rate of removing impurities can be increased. An increase in the temperature of the solution also can increase the rate of removing impurities, but in order to prevent the solution from boiling, the temperature is preferably equal to or less than the boiling point of the solvent.

3. Lithium-ion secondary cell

The lithium-ion secondary cell of the present invention includes a positive electrode, a negative electrode, and an electrolyte solution. In the lithium-ion secondary cell, "the total molar amount of an alkali metal and an alkaline earth metal contained in the negative electrode at full charge" is larger than "the molar amount of lithium calculated from the capacity of the positive electrode active material possessed by the positive electrode". In other words, in the lithium-ion

secondary cell of the present invention, the negative electrode before energization is predoped with an alkali metal and/or an alkaline earth metal. "The molar amount of lithium calculated from the capacity of the positive electrode active material," "the total molar amount of alkali metal and alkaline earth metal contained in the negative electrode at full charge," and "the amount of the alkali metal and alkaline earth metal predoped in the negative electrode" can be verified by the following method.

"The total molar amount of alkali metal and alkaline earth metal contained in the negative electrode at full charge" can be identified by an element quantitative analysis method such as ICP emission spectrometry and atomic absorption spectrometry. Incidentally, the total molar amount corresponds to the total (A) of "the molar amount of lithium contributing to charge/discharge of the positive electrode active material (B)" and "the total molar amount of the alkali metal and alkaline earth metal in the negative electrode (the alkali metal and alkaline earth metal predoped in the negative electrode before energization)".

Meanwhile, "the molar amount of lithium calculated from the capacity of the positive electrode active material" can be identified by producing a half cell including a positive electrode of a lithium-ion secondary cell and a counter electrode of lithium metal and measuring the discharge (lithium absorption to the positive electrode) capacity of the half cell. Then, the value corresponds to the above "molar amount of lithium contributing to charge/discharge of the positive electrode active material (B)," and thus, subtraction of (A) from (B) can identify "the amount of alkali metal and alkaline earth metal predoped in the negative electrode".

In the lithium-ion secondary cell of the present invention, the negative electrode is predoped, before energization, with 3 mol% or more and 50 mol% or less, preferably 7 mol% or more and 40 mol% or less, still more preferably 10 mol% or more and 35 mol% or less of an alkali metal and/or an alkaline earth metal based on "the molar amount of lithium calculated from the capacity of the positive electrode active material possessed by the positive electrode" aforementioned. With a total molar amount of the alkali metal and alkaline earth metal contained in the negative electrode before energization in the above range, the predoped negative electrode is stable, a reduction in the doping capacity over time is small, and a lithium-ion secondary cell can be assembled in atmosphere which is not an inert atmosphere. When the total molar amount of the alkali metal and alkaline earth metal is less than 3 mol%, the initial charge/discharge efficiency of the cell will not sufficiently increase. The total molar amount of more than 50 mol% is not practical because the activity of the negative electrode increases and a cell has to be assembled in an inert atmosphere such as argon.

As the negative electrode of the lithium-ion secondary cell of the present invention herein, the aforementioned negative electrode for a lithium-ion secondary cell can be utilized. Subsequently, components other than the negative electrode of the lithium-ion secondary cell, that is, the positive electrode, electrolyte solution, and separator will be described below.

3-1. Positive Electrode

The positive electrode of the lithium-ion secondary cell of the present invention, which is appropriately selected depending on applications of the lithium-ion secondary cell, may be a laminate or the like including, for example, a sheet collector and positive electrode-mixture layers disposed on both faces of the collector.

(Positive electrode-Mixture Layer)

The positive electrode-mixture layer is a layer obtained by binding a positive electrode active material using a binder. The positive electrode active material is not particularly limited as long as it is a material that is capable of absorbing and desorbing lithium, and it is possible to use a positive electrode active material usually used in lithium-ion secondary cells. Specific examples include lithium-manganese composite oxides (such as $LiMn_2O_4$), lithium-nickel composite oxides (such as $LiNiO_2$), lithium-cobalt composite oxides (such as $LiCoO_2$), lithium-iron composite oxides (such as $LiFeO_2$), lithium-nickel-manganese composite oxides (such as $LiNi_{0.5}Mn_{0.5}O_2$), lithium-nickel-cobalt composite oxides (such as $LiNi_{0.8}Co_{0.2}O_2$), lithium-nickel-cobalt-manganese composite oxides, lithium-transition metal phosphate compounds (such as $LiFePO_4$), and lithium-transition metal sulfate compounds ($Li_xFe_2(SO_4)_3$).

The positive electrode-mixture layer may include one of these positive electrode active materials singly or may include two or more of these. The content of the positive electrode active material in the positive electrode-mixture layer is usually 10 mass% or more, preferably 30 mass% or more, still more preferably 50 mass% or more. Also, the content is usually 99.9 mass% or less, preferably 99 mass% or less.

Meanwhile, the binder for binding the positive electrode active material may be a binder such as that contained in the above negative electrode-mixture layer (the imide-bond containing polymer (C)), and also may be other known binder resins. Examples of the known binder resin include inorganic compounds such as silicate and water glass, Teflon™, polyvinylidene fluoride, and polymers having no unsaturated bond. The lower limit of the weight average molecular weight of these polymers is usually 10,000, preferably 100,000. The upper limit is usually 3,000,000, preferably 1,000,000.

The positive electrode-mixture layer may contain a conductive additive in order to improve the electrical conductivity of the electrode. The conductive additive is not particularly limited as long as it can impart electrical conductivity, and examples thereof usually include carbon powder such as acetylene black, carbon black, and graphite, various metal fibers, powders, and foils.

The thickness of the positive electrode-mixture layer is usually about 10 to 200 $\mu m$. The density of the positive electrode-mixture layer (calculated from the mass of the positive electrode-mixture layer laminated on the collector per unit area and the thickness) is preferably 3.0 to 4.5 $g/cm^3$.

(Positive Electrode collector)

As the material of the collector in the positive electrode, a metal material such as aluminum, stainless steel, nickel plating, titanium, and tantalum, and a carbon material such as carbon cloth and carbon paper may be usually used. Of these, the metal material is preferred, and aluminum is particularly preferred. With respect to the form of the collector, when the collector is made of a metal material, the collector may be in the form of a foil, column, coil, plate, or thin film. The collector may be in a mesh form or the like and may be made of expanded metal, punched metal, foamed metal or the like. Meanwhile, when the collector is made of a carbon material, the collector may be in the form of a plate, thin film, column or the like. Of these, metal thin films, which are now used in industrial products, are preferred.

When the positive electrode collector is a thin film, the film may have any thickness. The thickness is usually 1 $\mu m$ or more, preferably 3 $\mu m$ or more, more preferably 5 $\mu m$ or more. The thickness is also usually 100 mm or less, preferably 1 mm or less, more preferably 50 $\mu m$ or less. If the thickness is smaller than that within the above range, the strength necessary as the collector may become insufficient. In contrast, if the thickness is larger than that within the above range, the handleability may deteriorate.

(Method for Forming Positive Electrode)

The aforementioned positive electrode can be obtained by dispersing the positive electrode active material, a binder or precursor thereof, a conductive additive and the like into a solvent to prepare a positive electrode mixture paste and applying this paste onto a collector. After application of the positive electrode mixture paste, the solvent is removed or the binder precursor is allowed to react as required to dry and solidify the positive electrode mixture paste. The method for applying or solidifying the positive electrode mixture paste or the like may be the same as that in the method for forming the negative electrode.

3-2. Electrolyte Solution

The electrolyte solution of the lithium-ion secondary cell of the present invention may be a non-aqueous electrolyte solution prepared by dissolving a lithium salt in a non-aqueous solvent. The non-aqueous electrolyte solution may also be prepared in a form of a gel, a rubber, a solid sheet or the like by adding an organic polymer compound and/or the like to the solution.

The non-aqueous electrolyte solution contains a lithium salt and a non-aqueous solvent. The lithium salt can be appropriately selected from known lithium salts. Examples thereof include inorganic halides such as LiCl and LiBr; perhalide salts such as $LiBrO_4$ and $LiClO_4$; inorganic fluoride salts such as $LiPF_6$, $LiBF_4$, and $LiAsF_6$; inorganic lithium salts such as lithium bis(oxalatoborate) $LiBC_4O_8$; and fluorine-containing organic lithium salts including perfluoroalkane sulfonate salts such as $LiCF_3SO_3$ and $LiC_4F_9SO_3$; and perfluoroalkane sulfonate imide salts such as Li trifluorosulfone imide ($(CF_3SO_2)_2NLi$). The electrolyte solution may include one of these lithium salts singly or may include two or more of these. The concentration of the lithium salt in the non-aqueous electrolyte solution usually ranges 0.5 M or more and 2.0 M or less.

Examples of the non-aqueous solvent include cyclic carbonates such as ethylene carbonate (EC), propylene carbonate (PC), butylene carbonate (BC), and vinylene carbonate (VC), chain carbonates such as dimethyl carbonate (DMC), diethyl carbonate (DEC), ethylmethyl carbonate (EMC), and dipropyl carbonate (DPC), aliphatic carboxylate esters such as methyl formate, methyl acetate, methyl propionate, and ethyl propionate, $\gamma$-lactones such as $\gamma$-butyrolactone, chain ethers such as 1,2-dimethoxyethane (DME), 1,2-diethoxyethane (DEE), and ethoxymethoxyethane (EME), cyclic ethers such as tetrahydrofuran and 2-methyltetrahydrofuran, aprotoic organic solvents such as dimethyl sulfoxide, 1,3-dioxolane, formamide, acetamide, dimethylformamide, dioxolane, acetonitrile, propylnitrile, nitromethane, ethylmonoglyme, phosphate triester, trimethoxymethane, dioxolane derivatives, sulfolane, methylsulfolane, 1,3-dimethyl-2-imidazolidinone, 3-methyl-2-oxazolidinone, propylene carbonate derivatives, tetrahydrofuran derivatives, ethyl ether, 1,3-propanesultone, anisole, dimethyl sulfoxide, N-methylpyrrolidone, butyldiglyme, and methyltetraglyme. The electrolyte solution may include one of these singly or may include two or more of these.

The specific examples of the organic polymer compound for preparing an electrolyte solution in a gel form, a

rubber form, or a solid sheet form include polyether polymer compounds such as polyethylene oxide and polypropylene oxide; crosslinked polymers of polyether polymer compounds; vinyl alcohol polymer compounds such as polyvinyl alcohol and polyvinyl butyral; insolubilized products of vinyl alcohol polymer compounds; polyepichlorohydrin; polyphosphazene; polysiloxane; vinyl polymer compounds such as polyvinylpyrrolidone, polyvinylidene carbonate, and polyacrylonitrile; polymeric copolymers such as poly(co-methoxyoligooxyethylene methacrylate), poly(ω-methoxyoligooxyethylene methacrylate-co-methyl methacrylate), and poly(hexafluoropropylene-vinylidene fluoride).

The electrolyte solution may further include a film former. Specific examples of the film former include carbonate compounds such as vinylene carbonate, vinylethylene carbonate, vinylethyl carbonate, and methylphenyl carbonate, fluorine-based carbonate compounds such as fluoroethylene carbonate, difluoroethylene carbonate, trifluoromethylethylene carbonate, bis(trifluoromethyl)ethylene carbonate, 1-fluoroethylmethyl carbonate, ethyl 1-fluoroethyl carbonate, fluoromethylmethyl carbonate, bis(1-fluoroethyl) carbonate, bis(fluoromethyl) carbonate, ethyl 2-fluoroethyl carbonate, bis(2-fluoroethyl) carbonate, methyl 1,1,1-trifluoropropan-2-yl carbonate, ethyl 1,1,1-trifluoropropan-2-yl carbonate, methyl 2,2,2-trifluoroethyl carbonate, bis(1,1,1-trifluoropropan-2-yl) carbonate, bis(2,2,2-trifluoroethyl) carbonate, ethyl 3,3,3-trifluoropropyl carbonate, and bis(3,3,3-trifluoropropyl) carbonate, alkene sulfides such as ethylene sulfide and propylene sulfide; sultone compounds such as 1,3-propanesultone and 1,4-butanesultone; acid anhydride such as maleic anhydride and succinic anhydride.

When the electrolyte solution includes a film former, the film former content is usually 30 mass% or less, preferably 15 mass% or less, more preferably 10 mass% or less, particularly preferably 2 mass% or less based on the total amount (mass) of the constituents of the electrolyte solution. An excessively high content of the film former may cause adverse effects on other cell characteristics, such as an increase in the initial irreversible capacity of lithium-ion secondary cell and a reduction in low temperature characteristics or rate characteristics.

3-3. Separator

The lithium-ion secondary cell of the present invention may include a separator between the positive electrode and the negative electrode. When a separator is included, a short circuit between the electrodes can be prevented. The separator is usually a porous member such as a porous film and non-woven fabric. The porosity of the separator is appropriately set depending on the electron or ion permeability, the material of separator or the like and is generally desirably 30 to 80%.

Examples of the separator include microporous films, glass fiber sheets, non-woven fabric, woven fabric and the like having excellent ion permeability. From the viewpoint of organic solvent resistance and hydrophobicity, examples of the material for the separator include polypropylene, polyethylene, polyphenylenesulfide, polyethylene terephthalate, polyethylene naphthalate, polymethylpentene, polyamides, and polyimides. The separator may be formed of one of these singly or may be formed of two or more of these.

In such separators, polypropylene, which is an inexpensive resin, is usually employed. When reflow resistance is required from the lithium-ion secondary cell of the present invention, polypropylene sulfide, polyethylene terephthalate, polyamides, polyimides, and the like, each of which has a thermal deformation temperature of 230°C or more, are preferred. The thickness of the separator may be usually about 10 to 300 μm.

3-4. Form of Lithium-ion secondary cell

The lithium-ion secondary cell of the present invention may have any form. Examples of the form of the lithium-ion secondary cell include cylinder types in which sheet electrodes and the separator are provided in a spiral, cylinder types having an inside-out structure in which pellet electrodes and the separator are combined, and coin types in which pellet electrodes and the separator are laminated. Further, by housing the cell having such a form into an outer case, the cell may have any form such as a coin type, a cylinder type, a square type, and a pouch type.

3-5. Method for Producing Lithium-ion secondary cell

The lithium-ion secondary cell can be produced by assembling the negative electrode for a lithium-ion secondary cell predoped with an alkali metal and/or an alkaline earth metal, the positive electrode, and the like aforementioned in an appropriate procedure depending on the structure of the cell. For example, a cell can be produced by placing a negative electrode on an outer case, providing an electrolyte solution and a separator thereon, and placing a positive electrode to face the negative electrode, followed by swaging with a gasket and a sealing plate.

Examples

Hereinafter, the present invention will be described in detail with reference to examples; however, the scope

of the present invention is not intended to be limited by these examples.

Abbreviations used in Examples and Comparative Examples are shown as follows.

p-PD: p-phenylenediamine
m-BP: 4,4'-bis(3-aminophenoxy)biphenyl
ODA: 4,4'-diaminodiphenyl ether
BPDA: 3,3',4,4'-biphenyltetracarboxylic dianhydride
NMP: N-methyl-2-pyrrolidone
THF: tetrahydrofuran
DMC: dimethyl carbonate

Methods for measuring various physical properties in the present Examples and Comparative Examples are as follows.

(Solid Content Concentration of Binder Resin Composition for Mixture Layer)

A binder resin composition for a mixture layer (its mass is designated as $w_1$) was heat-treated in a hot-air dryer at 300°C for 60 minutes, and the mass after heat treatment (the mass is designated as $w_2$) was measured. The solid content concentration (mass%) was calculated by the following equation.

$$\text{Solid content concentration (mass\%)} = (w_2 / w_1) \times 100$$

(Logarithmic Viscosity of Binder Resin Composition for Mixture Layer)

The binder resin composition for a mixture layer was diluted such that its concentration reached 0.5 g/dl (the solvent was NMP) based on the solid content concentration. The flow-down time of the diluted liquid ($T_1$) was measured at 35°C using an automatic kinematic viscosity measuring device PVS manufactured by LAUDA. The logarithmic viscosity was calculated by the following equation using the flow-down time of a blank NMP ($T_0$).

$$\text{Logarithmic viscosity [dl/g]} = \{\ln(T_1 / T_0)\} / 0.5$$

(Degree of Swelling of Imide-bond Containing Polymer)

A 10-cm square piece was cut from a polyimide film having a thickness of 20 μm obtained from the binder resin composition for a mixture layer, and its mass after vacuum drying at 100°C for three hours was determined as the dry mass (Wd). The mass after this film was immersed in THF at 60°C for 24 hours was determined as the swollen mass (Ww), and the degree of swelling of the imide-bond containing polymer was each calculated by the following equation.

$$\text{Degree of swelling of imide-bond containing polymer (mass\%)} = (Ww - Wd) / Wd \times 100$$

(Predoping Capacity and Initial Charge/Discharge Efficiency of Negative Electrode)

The predoping capacity and the initial charge/discharge efficiency of the cell were evaluated using a coin cell. A negative electrode having a diameter of 14.5 mm produced in each of Examples and Comparative Examples and a positive electrode having a diameter of 15 mm made of Li foil were used as electrodes. The electrolyte solution used was a solution of $LiPF_6$ dissolved at a concentration of 1 mol/l in a mixed solvent of ethylene carbonate and diethyl carbonate (mixed at a volume ratio of 1:1). The separator used was a polypropylene porous film having a diameter of 16 mm and a film thickness of 25 μm.

Meanwhile, a negative electrode was formed in the same manner as in each of Examples and Comparative Examples except that Li predoping was not conducted. Coin cells including the negative electrode (non-doped negative electrode) were also produced.

These cells were, after left to stand at 25°C for 24 hours, discharged to 0.05 V under a constant current at a measurement temperature of 25°C and at 0.05 C, and then, discharged to 0.01 C under a constant voltage. Subsequently, the cells were charged to 3 V under a constant current at 0.05 C in the CC mode. The discharge capacity during the

charging/discharging was used as the capacity during Li intercalation in the negative electrode, and the charge capacity was used as the capacity during Li deintercalation. Then, the predoping capacity and the initial charge/discharge efficiency were calculated by the following equation.

$$\text{-Predoping capacity (mAh/g)} = (a - b) - (c - d)$$

a: capacity during Li intercalation of a non-doped negative electrode (mAh/g)
b: capacity during Li deintercalation (mAh/g) when charge under a constant current is performed to 3 V using a non-doped negative electrode
c: capacity during Li intercalation (mAh/g) of a doped negative electrode (negative electrode produced in one of Examples and Comparative Examples)
d: capacity during Li deintercalation (mAh/g) when charge under a constant current is performed to 3 V using a doped negative electrode (negative electrode produced in one of Examples and Comparative Examples)

$$\text{-Initial charge / discharge efficiency (\%)} = e / c*100$$

e: capacity during Li deintercalation (mAh/g) when charge under a constant current is performed to 1.2 V using a doped negative electrode (negative electrode produced in one of Examples and Comparative Examples)

(Predoping Capacity per Unit Amount of Alloy Material (A))

The predoping capacity per unit amount of the alloy material was calculated from a value obtained by dividing the above predoping capacity by the amount of the alloy material based on the total amount of the active material (the total of the alloy material and the carbon particles).

[Synthesis Example 1]

<Synthesis of Binder Resin Composition for Mixture Layer A (Imide-bond Containing Polymer)>

To a vessel equipped with a stirrer and a nitrogen inlet, 32.44 g (0.3 mol) of p-PD, 36.84 g (0.1 mol) of m-BP, and 532.7 g of NMP as a solvent were charged. The temperature of the solution was raised to 50°C, and the solution was stirred until p-PD and m-BP were dissolved. After the temperature of the solution was reduced to room temperature, 115.33 g (0.39 mol) of BPDA was fed over about 30 minutes. Further, 228.3 g of NMP was added, and the solution was stirred for 20 hours to obtain a binder resin composition for a mixture layer A. The binder resin composition for a mixture layer A obtained had a solid content concentration of the imide-bond containing polymer of 18 mass% and a logarithmic viscosity of 0.89 dl/g.

The present resin composition was applied onto a glass plate and heat-treated at 350°C for 2 hours to produce a polyimide film having a film thickness of 20 μm. The degree of swelling of the polyimide (imide-bond containing polymer) was measured. The degree of swelling of the polyimide with respect to THF was 1 mass%.

[Synthesis Example 2]

<Synthesis of Binder Resin Composition for Mixture Layer B (Imide-bond Containing Polymer)>

To a vessel equipped with a stirrer and a nitrogen inlet, 47.9 g (0.13 mol) of m-BP and 254 g of NMP as a solvent were charged, and the mixture was stirred into mBP was dissolved. After the temperature of the solution was reduced to room temperature, 37.48 g (0.127 mol) of BPDA was fed over about 30 minutes, and 109 g of NMP was further added. The solution was stirred for 20 hours to obtain a binder resin composition for a mixture layer B. The binder resin composition for a mixture layer B obtained had a solid content concentration of the imide-bond containing polymer of 18 mass% and a logarithmic viscosity of 0.8 dl/g.

The present resin composition was applied onto a glass plate and heat-treated at 350°C for 2 hours to produce a polyimide film having a film thickness of 20 μm. The degree of swelling of the polyimide (imide-bond containing polymer) was measured. The degree of swelling of the polyimide with respect to THF was 6 mass%.

[Example 1]

<Production of Negative Electrode>

The binder resin composition for a mixture layer A containing 5 parts by mass of the imide-bond containing polymer (27.8 parts by mass) and 3 parts by mass of a conductive additive (VGCF-H manufactured by Showa Denko K. K.) were kneaded using a compound stirrer for cells (T.K. HIVIS MIX model 2P-03 manufactured by PRIMIX Corporation). To the paste obtained, 92 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. NMP was further added thereto, and the mixture was further kneaded to prepare a negative electrode mixture paste. The volume ratio between the silicon oxide and the carbon particles, both of which constitute an active material, was 20:80.

This negative electrode mixture paste was applied onto SUS foil (thickness: 20 μm) as a collector using an applicator and heat-treated to be cured under a nitrogen atmosphere at 350°C for five minutes. Then, there was obtained a negative electrode in which the collector and the negative electrode-mixture layer were laminated. The mass of the active material in the negative electrode-mixture layer after drying was 4 mg/cm$^2$ (unit area).

<Li Predoping to Negative Electrode>

(Predoping)

Naphthalene at a concentration of 0.2 mol/L and metal Li in a saturated amount were dissolved in THF. The negative electrode produced by the above method was immersed in the solution at 25°C for ten minutes to predope the negative electrode with Li.

(Removing of Impurities)

The negative electrode predoped with Li was immersed in DMC for one minute, drawn up therefrom, and vacuum-dried for five minutes to obtain a doped negative electrode.

The negative electrode predoped with Li was used to produce a coin cell. As aforementioned, the capacity during Li intercalation/deintercalation was measured to calculate the predoping capacity and initial charge/discharge efficiency. The results are shown in Table 1.

[Example 2]

The binder resin composition for a mixture layer A containing 8 parts by mass of the imide-bond containing polymer (44.4 parts by mass) and 3 parts by mass of a conductive additive (VGCF-H manufactured by Showa Denko K. K.) were kneaded using a compound stirrer for cells (T.K. HIVIS MIX model 2P-03 manufactured by PRIMIX Corporation). To the paste obtained, 89 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. NMP was further added thereto, and the mixture was further kneaded to prepare a negative electrode mixture paste. The volume ratio between the silicon oxide and the carbon particles, both of which constitute an active material, was 20:80.

This negative electrode mixture paste was applied onto SUS foil (thickness: 20 μm) as a collector using an applicator and heat-treated to be cured under a nitrogen atmosphere at 350°C for five minutes. Thereby, there was produced a negative electrode in which the collector and the negative electrode-mixture layer were laminated. The mass of the active material in the negative electrode-mixture layer after drying was 4.1 mg/cm$^2$ (unit area).

The negative electrode was predoped with Li in the same manner as in Example 1. The negative electrode predoped with Li was used to produce a coin cell. The capacity during Li intercalation/deintercalation was measured to calculate the predoping capacity and the initial charge/discharge efficiency. The results are shown in Table 1.

[Example 3]

The binder resin composition for a mixture layer A containing 10 parts by mass of the imide-bond containing polymer (55.6 parts by mass) and 3 parts by mass of a conductive additive (VGCF-H manufactured by Showa Denko K. K.) were kneaded using a compound stirrer for cells (T.K. HIVIS MIX model 2P-03 manufactured by PRIMIX Corporation). To the paste obtained, 87 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. NMP was further added thereto, and the mixture was further kneaded to prepare a negative electrode mixture paste. The volume ratio between the silicon oxide and the carbon particles, both of which constitute an active material, was 20:80.

This negative electrode mixture paste was applied onto SUS foil (thickness: 20 μm) as a collector using an applicator and heat-treated to be cured under a nitrogen atmosphere at 350°C for five minutes. Thereby, there was produced a negative electrode in which the collector and the negative electrode-mixture layer were laminated. The mass of the active material in the negative electrode-mixture layer after drying was 4.2/cm$^2$ (unit area).
The negative electrode was predoped with Li in the same manner as in Example 1. The negative electrode predoped with Li was used to produce a coin cell. The capacity during Li intercalation/deintercalation was measured to calculate the predoping capacity and the initial charge/discharge efficiency. The results are shown in Table 1.

[Example 4]

The binder resin composition for a mixture layer A containing 10 parts by mass of the imide-bond containing polymer (55.6 parts by mass) and 3 parts by mass of a conductive additive (VGCF-H manufactured by Showa Denko K. K.) were kneaded using a compound stirrer for cells (T.K. HIVIS MIX model 2P-03 manufactured by PRIMIX Corporation). To the paste obtained, 87 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. NMP was further added thereto, and the mixture was further kneaded to prepare a negative electrode mixture paste. The volume ratio between the silicon oxide and the carbon particles, both of which constitute an active material, was 40:60.
This negative electrode mixture paste was applied onto SUS foil (thickness: 20 μm) as a collector using an applicator and heat-treated to be cured under a nitrogen atmosphere at 350°C for five minutes. Thereby, there was produced a negative electrode in which the collector and the negative electrode-mixture layer were laminated. The mass of the active material in the negative electrode mixture after drying was 3.1 mg/cm$^2$ (unit area).
The negative electrode was predoped with Li in the same manner as in Example 1. The negative electrode predoped with Li was used to produce a coin cell. The capacity during Li intercalation/deintercalation was measured to calculate the predoping capacity and the initial charge/discharge efficiency. The results are shown in Table 1.

[Example 5]

The binder resin composition for a mixture layer A containing 10 parts by mass of the imide-bond containing polymer (55.6 parts by mass) and 3 parts by mass of a conductive additive (VGCF-H manufactured by Showa Denko K. K.) were kneaded using a compound stirrer for cells (T.K. HIVIS MIX model 2P-03 manufactured by PRIMIX Corporation). To the paste obtained, 87 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. NMP was further added thereto, and the mixture was further kneaded to prepare a negative electrode mixture paste. The volume ratio between the silicon oxide and the carbon particles, both of which constitute an active material, was 60:40. This negative electrode mixture paste was applied onto SUS foil (thickness: 20 μm) as a collector using an applicator and heat-treated to be cured under a nitrogen atmosphere at 350°C for five minutes. Thereby, there was produced a negative electrode. The mass of the active material in the negative electrode mixture after drying was 2.6 mg/cm$^2$ (unit area).
The negative electrode was predoped with Li in the same manner as in Example 1. The negative electrode predoped with Li was used to produce a coin cell. The capacity during Li intercalation/deintercalation was measured to calculate the predoping capacity and the initial charge/discharge efficiency. The results are shown in Table 1.

[Example 6]

The binder resin composition for a mixture layer B containing 5 parts by mass of the imide-bond containing polymer (27.8 parts by mass) and 3 parts by mass of a conductive additive (VGCF-H manufactured by Showa Denko K. K.) were kneaded using a compound stirrer for cells (T.K. HIVIS MIX model 2P-03 manufactured by PRIMIX Corporation). To the paste obtained, 92 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. NMP was further added thereto, and the mixture was further kneaded to prepare a negative electrode mixture paste. The volume ratio between the silicon oxide and the carbon particles, both of which constitute an active material, was 20:80.
This negative electrode mixture paste was applied onto SUS foil (thickness: 20 μm) as a collector using an applicator and heat-treated to be cured under a nitrogen atmosphere at 350°C for five minutes. Thereby, there was produced a negative electrode in which the collector and the negative electrode-mixture layer were laminated. The mass of the active material in the negative electrode mixture after drying was 4 mg/cm$^2$ (unit area).
The negative electrode was predoped with Li in the same manner as in Example 1. The negative electrode predoped with Li was used to produce a coin cell. The capacity during Li intercalation/deintercalation was measured to calculate the predoping capacity and the initial charge/discharge efficiency. The results are shown in Table 1.

[Example 7]

The binder resin composition for a mixture layer A containing 10 parts by mass of the imide-bond containing polymer (55.6 parts by mass) and 3 parts by mass of a conductive additive (VGCF-H manufactured by Showa Denko K. K.) were kneaded using a compound stirrer for cells (T.K. HIVIS MIX model 2P-03 manufactured by PRIMIX Corporation). To the paste obtained, 87 parts by mass in total of silicon oxide (KSC-1064 manufactured by Shin-Etsu Chemical Co., Ltd.) and carbon particles (graphite: SMG-N-HP1-10 manufactured by Hitachi Chemical Company, Ltd.) were added. NMP was further added thereto, and the mixture was further kneaded to prepare a negative electrode mixture paste. The volume ratio between the silicon oxide and the carbon particles, both of which constitute an active material, was 20:80. This negative electrode mixture paste was applied onto SUS foil (thickness: 20 μm) as a collector using an applicator and heat-treated to be cured under a nitrogen atmosphere at 350°C for five minutes, and thereby a negative electrode was produced. The mass of the active material in the negative electrode mixture after drying was 4 $mg/cm^2$ (unit area).

<Li Predoping to Negative Electrode>

(Predoping)

Naphthalene at a concentration of 0.2 mol/L and metal Li in a saturated amount were dissolved in THF. The negative electrode produced by the above method was immersed in the solution at 25°C for three minutes to predope the negative electrode with Li.

(Removing of Impurities)

The negative electrode predoped with Li was immersed in DMC for one minute, drawn up therefrom, and vacuum-dried for five minutes to obtain a doped negative electrode.

Then, the negative electrode predoped with Li was used to produce a coin cell. As aforementioned, the capacity during Li intercalation/deintercalation was measured to calculate the predoping capacity and initial charge/discharge efficiency. The results are shown in Table 1.

[Example 8]

The binder resin composition for a mixture layer A containing 10 parts by mass of the imide-bond containing polymer (55.6 parts by mass) and 3 parts by mass of a conductive additive (VGCF-H manufactured by Showa Denko K. K.) were kneaded using a compound stirrer for cells (T.K. HIVIS MIX model 2P-03 manufactured by PRIMIX Corporation). To the paste obtained, 87 parts by mass in total of silicon oxide (KSC-1064 manufactured by Shin-Etsu Chemical Co., Ltd.) and carbon particles (hard carbon (HC) manufactured by Sumitomo Bakelite Co., Ltd.) were added. NMP was further added thereto, and the mixture was further kneaded to prepare a negative electrode mixture paste. The volume ratio between the silicon oxide and the carbon particles, both of which constitute an active material, was 20:80. This negative electrode mixture paste was applied onto SUS foil (thickness: 20 μm) as a collector using an applicator and heat-treated to be cured under a nitrogen atmosphere at 350°C for five minutes. Thereby, there was produced a negative electrode. The mass of the active material in the negative electrode mixture after drying was 4.1 $mg/cm^2$ (unit area).

The negative electrode was predoped with Li in the same manner as in Example 7. The negative electrode predoped with Li was used to produce a coin cell. The capacity during Li intercalation/deintercalation was measured to calculate the predoping capacity and the initial charge/discharge efficiency. The results are shown in Table 1.

[Comparative Example 1]

The binder resin composition for a mixture layer A containing 10 parts by mass of the imide-bond containing polymer (55.6 parts by mass) and 3 parts by mass of a conductive additive (VGCF-H manufactured by Showa Denko K. K.) were kneaded using a compound stirrer for cells (T.K. HIVIS MIX model 2P-03 manufactured by PRIMIX Corporation). To the paste obtained, 87 parts by mass of carbon particles (graphite: MAGD-20 manufactured by Hitachi Chemical Company, Ltd.) was added. NMP was further added thereto, and the mixture was further kneaded to prepare a negative electrode mixture paste. This negative electrode mixture paste was applied onto SUS foil (thickness: 20 μm) as a collector using an applicator and heat-treated to be cured under a nitrogen atmosphere at 350°C for five minutes. Thereby, there was produced a negative electrode in which the collector and the negative electrode-mixture layer were laminated. The mass of the active material in the negative electrode mixture after drying was 9.2 $mg/cm^2$ (unit area).

The negative electrode was predoped with Li in the same manner as in Example 1. The negative electrode

predoped with Li was used to produce a coin cell. The capacity during Li intercalation/deintercalation was evaluated to calculate the predoping capacity and initial charge/discharge efficiency. The results are shown in Table 1.

[Comparative Example 2]

The binder resin composition for a mixture layer A containing 10 parts by mass of the imide-bond containing polymer (55.6 parts by mass) and 3 parts by mass of a conductive additive (VGCF-H manufactured by Showa Denko K. K.) were kneaded using a compound stirrer for cells (T.K. HIVIS MIX model 2P-03 manufactured by PRIMIX Corporation). To the paste obtained, 87 parts by mass of silicon oxide (KSC-1064 manufactured by Shin-Etsu Chemical Co., Ltd.) was added. NMP was further added thereto, and the mixture was further kneaded to prepare a negative electrode mixture paste. This negative electrode mixture paste was applied onto SUS foil (thickness: 20 μm) as a collector using an applicator and heat-treated to be cured under a nitrogen atmosphere at 350°C for five minutes. Thereby, there was produced a negative electrode in which the collector and the negative electrode-mixture layer were laminated. The mass of the active material in the negative electrode mixture after drying was 1.3 $mg/cm^2$ (unit area).

The negative electrode was predoped with Li in the same manner as in Example 1. The negative electrode predoped with Li was used to produce a coin cell. The capacity during Li intercalation/deintercalation was evaluated to calculate the predoping capacity and initial charge/discharge efficiency. The results are shown in Table 1.

[Comparative Example 3]

The binder resin composition for a mixture layer A containing 15 parts by mass of the imide-bond containing polymer (83.3 parts by mass) and 3 parts by mass of a conductive additive (VGCF-H manufactured by Showa Denko K. K.) were kneaded using a compound stirrer for cells (T.K. HIVIS MIX model 2P-03 manufactured by PRIMIX Corporation). To the paste obtained, 82 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. NMP was further added thereto, and the mixture was further kneaded to prepare a negative electrode mixture paste. The volume ratio between the silicon oxide and the carbon particles, both of which constitute an active material, was 20:80. This negative electrode mixture paste was applied onto SUS foil (thickness: 20 μm) as a collector using an applicator and heat-treated to be cured under a nitrogen atmosphere at 350°C for five minutes. Thereby, there was produced a negative electrode in which the collector and the negative electrode-mixture layer were laminated. The mass of the active material in the negative electrode mixture after drying was 4.3 $mg/cm^2$ (unit area).

The negative electrode was predoped with Li in the same manner as in Example 1. The negative electrode predoped with Li was used to produce a coin cell. The capacity during Li intercalation/deintercalation was evaluated to calculate the predoping capacity and initial charge/discharge efficiency. The results are shown in Table 1.

[Evaluation of Exfoliation of Mixture Layer]

A 20 × 145-mm rectangular piece cut from the negative electrode produced in Example 1 (degree of swelling of the imide-bond containing polymer; 1%) was rolled into a cylindrical form and placed along the wall face of a snap cup having an inner diameter of 23 cm. A naphthalene/metal Li solution at a concentration of 0.2 mol/L was poured thereto such that the negative electrode was completely immersed, which was left to stand for 30 minutes. Thereafter, the negative electrode was removed from the solution. Its appearance was visually inspected to observe no exfoliation of the mixture layer.

Meanwhile, the negative electrode (degree of swelling of the imide-bond containing polymer; 6%) produced in Example 6 was used to conduct treatment as described above. After treatment, exfoliation of the mixture layer was observed.

[Table 1]

| | | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 |
|---|---|---|---|---|---|---|---|---|---|---|---|---|
| Active material | Alloy material (A) | SiO | SiO | SiO | SiO | SiO | SiO | SiO | SiO | - | SiO | SiO |
| | Carbon particles (B) | MAGD | MAGD | MAGD | MAGD | MAGD | MAGD | SMG | HC | MAGD | - | MAGD |
| | Content of (A) [A/A+B] (vol%) | 20 | 20 | 20 | 40 | 60 | 20 | 20 | 20 | 0 | 100 | 20 |
| Imide-bond containing polymer (C) | Binder resin composition for a mixture layer | A | A | A | A | A | B | A | A | A | A | A |
| | Molecular weight per repeating constituent unit containing an imide bond or amide acid | 433 | 433 | 433 | 433 | 433 | 628 | 433 | 433 | 433 | 433 | 433 |
| | Content of imide-bond containing polymer in mixture layer (mass%) | 5 | 8 | 10 | 10 | 10 | 5 | 5 | 5 | 10 | 10 | 15 |
| | Degree of swelling of film formed by imide-bond containing polymer (mass%) | 1 | 1 | 1 | 1 | 1 | 6 | 1 | 1 | 1 | 1 | 1 |
| Polycyclic aromatic compound (D) | Content per unit area of negative electrode (μg/cm$^2$) | 0.12 | 0.09 | 0.04 | 0.03 | 0.02 | 0.13 | 0.17 | 0.10 | 1 0.06 | 0.04 | 0.03 |
| Evaluation of capacity of coin cell including non-doped negative electrode | a) Capacity during Li intercalation (mAh/g) | 774 | 810 | 841 | 1217 | 1571 | 719 | 777 | 753 | 552 | 2207 | 992 |
| | b) Capacity during Li deintercalation (mAh/g) | 707 | 725 | 740 | 1115 | 1413 | 667 | 709 | 689 | 490 | 2027 | 849 |
| Evaluation of capacity of coin cell including Li-doped negative electrode | c) Capacity during Li intercalation (mAh/g) | 627 | 695 | 744 | 1048 | 1421 | 605 | 693 | 625 | 513 | 1837 | 950 |
| | d) Capacity during Li deintercalation (mAh/g) | 703 | 722 | 760 | 1114 | 1406 | 669 | 704 | 668 | 474 | 1822 | 823 |
| | e) Capacity during Li deintercalation (1.2V cut, mAh/g) | 614 | 610 | 625 | 912 | 1141 | 590 | 612 | 560 | 395 | 1493 | 631 |
| Initial charge/discharge efficiency (%) | | 97.9 | 87.8 | 84.0 | 87.0 | 80.3 | 97.5 | 88.3 | 89.6 | 77.0 | 81.3 | 66.4 |
| Li-predoping capacity (mAh/g - (a - b) - (c - d)) | | 143 | 112 | 117 | 168 | 143 | 116 | 79 | 107 | 23 | 165 | 16 |

(continued)

| | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 |
|---|---|---|---|---|---|---|---|---|---|---|---|
| Li-predoping capacity (mAh/g - (A) mass)* | 715 | 560 | 585 | 420 | 238 | 580 | 395 | 535 | - | 165 | 80 |

*Li-predoping capacity per unit amount of alloy material (A)

As shown in Table 1, Examples 1 to 8 containing the alloy material (A) and the carbon particles (B) had a Li predoping capacity significantly higher than that in Comparative Example 1, in which the negative electrode active material was made only of the carbon particles (B). Examples 1 to 8 also had a Li predoping capacity based on the mass of the alloy material (A) higher than that in Comparative Example 2, in which the negative electrode active material was made only of the alloy material (A). Especially, Examples 1 to 4 and 6 to 8, in which the Li predoping capacity based on the mass of the alloy material (A) was high, exhibited an initial charge/discharge efficiency higher than that in Comparative Example 2, in which the Li predoping capacity was low. Presumably, since the alloy material (A) was predoped heavily with lithium in these examples, irreversible components during the initial charging/discharging were less likely to be formed to thereby increase the initial charge/discharge efficiency.

Furthermore, Examples 1 to 8 and Comparative Example 1 and 2, in which the content of the imide-bond containing polymer (C) was 3 mass% or more and 13 mass% or less based on the mass of the negative electrode-mixture layer, had a Li predoping capacity higher than that in Comparative Example 3, in which the content thereof was outside the above range. Presumably, this is because the imide-bond containing polymer (C) was less likely to inhibit Li predoping.

In Examples 1 to 5, 7, and 8, in which the degree of swelling of film was less than 5 mass%, no exfoliation of the mixture layer was observed after the Li predoping. Meanwhile, in Examples 6, in which the degree of swelling of film was 5 mass% or more, partial exfoliation of the mixture layer were observed by evaluation of exfoliation of mixture layers as aforementioned.

In Examples 1, 7, and 8, the negative electrode predoped with Li was left to stand in a dry room having a dew point of -35°C for 24 hours. Thereafter, a coin cell was produced, and the capacity during Li intercalation/deintercalation was measured to calculate the initial charge/discharge efficiency as aforementioned. Examples 1 and 7, in which graphite was used as the carbon particles (B), had an initial charge/discharge efficiency after left to stand in a dry room of 83% and 84% respectively, which were a reduction of 4 to 5 points in the efficiency compared to that in the case where the negative electrode was not left stand in a dry room. Meanwhile, Example 8, in which hardly graphitizable carbon (hard carbon) was used as the carbon particles (B), had an initial charge/discharge efficiency after left to stand in a dry room of 55%, which was a reduction of 33 points in the efficiency compared to that in the case where the negative electrode was not left to stand in a dry room.

This application claims priority based on Japanese Patent Application No. 2015-154574, filed on August 4, 2015, the entire contents of which including the specification is incorporated herein by reference in its entirety.

Industrial Applicability

The lithium-ion secondary cell of the present invention has high initial charge/discharge efficiency and a high energy density. Accordingly, the lithium-ion secondary cell is applicable to various applications.

## Claims

1. A negative electrode for a lithium-ion secondary cell, including a negative electrode-mixture layer, the negative electrode-mixture layer comprising at least:

   an alloy material (A) which contains silicon or tin both capable of absorbing lithium; carbon particles (B); an imide-bond containing polymer (C); and a polycyclic aromatic compound (D),
   wherein:
   content of the imide-bond containing polymer (C) in the negative electrode-mixture layer is 3 mass% or more and 13 mass% or less.

2. The negative electrode for a lithium-ion secondary cell according to claim 1, wherein the alloy material (A) contained in the negative electrode-mixture layer has a volume of 7 vol% or more and less than 70 vol% based on a total volume of the alloy material (A) and the carbon particles (B).

3. The negative electrode for a lithium-ion secondary cell according claim 1 or 2, wherein the alloy material (A) is a silicon oxide represented by $SiO_x$ ($0.5 \leq x \leq 1.5$).

4. The negative electrode for a lithium-ion secondary cell according to claim 3, wherein:

   at least a portion of the silicon oxide is coated with carbon, and
   a deposition amount of the carbon is 2 to 50 mass% based on the mass of the silicon oxide.

**5.** The negative electrode for a lithium-ion secondary cell according to any one of claims 1 to 4, wherein the carbon particles (B) contains at least one type of graphite selected from the group consisting of natural graphite, artificial graphite, and carbon-coated graphite.

**6.** The negative electrode for a lithium-ion secondary cell according to any one of claims 1 to 5, wherein the carbon particles (B) have a total pore volume of $1.0 \times 10^{-2}$ to $1.0 \times 10^{-1}$ $cm^3/g$ and have an average pore diameter of 20 to 50 nm, both measured by a nitrogen gas adsorption method.

**7.** The negative electrode for a lithium-ion secondary cell according to any one of claims 1 to 6, wherein the carbon particles (B) are secondary aggregates where flat graphite material is aggregated or bonded.

**8.** The negative electrode for a lithium-ion secondary cell according to any one of claims 1 to 7, wherein the negative electrode-mixture layer further contains a conductive additive (E).

**9.** The negative electrode for a lithium-ion secondary cell according to claim 8, wherein the conductive additive (E) contains carbon fiber having an aspect ratio of 10 to 1,000.

**10.** The negative electrode for a lithium-ion secondary cell according to any one of claims 1 to 9, wherein a film having a film thickness of 20 μm made of the imide-bond containing polymer (C) has a mass change of less than 5 mass% when immersed in tetrahydrofuran at 60°C for 24 hours.

**11.** The negative electrode for a lithium-ion secondary cell according to any one of claims 1 to 10, wherein:

the imide-bond containing polymer (C) includes repeating constituent units containing an amide acid structure formed by reaction of a diamine compound with a tetracarboxylic dianhydride, or an imide bond, and
the repeating constituent unit has a molecular weight of 600 or less.

**12.** The negative electrode for a lithium-ion secondary cell according to any one of claims 1 to 11, wherein:

the imide-bond containing polymer (C) includes repeating constituent units containing an amide acid structure formed by reaction of a diamine compound with a tetracarboxylic dianhydride, or an imide bond, and
the diamine compound contains 50 mol% or more of a low-molecular-weight diamine compound having a molecular weight of 300 or less based on a total amount of the diamine compound.

**13.** A lithium-ion secondary cell comprising the negative electrode for a lithium-ion secondary cell according to any one of claims 1 to 12.

**14.** The lithium-ion secondary cell according to claim 13, wherein the negative electrode for a lithium-ion secondary cell, before energization, contains an alkali metal and/or an alkaline earth metal.

**15.** The lithium-ion secondary cell according to claim 13, wherein the alloy material (A), before energization, contains an alkali metal and/or an alkaline earth metal.

**16.** A method for producing a negative electrode for a lithium-ion secondary cell including a negative electrode-mixture layer, the method comprising:

obtaining the negative electrode-mixture layer by bringing an active material-containing layer containing at least an alloy material (A) which contains silicon or tin both capable of absorbing lithium, carbon particles (B), and an imide-bond containing polymer (C) into contact with an alkali metal and/or an alkaline earth metal under presence of a polycyclic aromatic compound,
wherein:
the alloy material (A) contained in the negative electrode-mixture layer has a volume of 10 vol% or more and less than 70 vol% based on a total volume of the alloy material (A) and the carbon particles (B), and content of the imide-bond containing polymer (C) in the negative electrode-mixture layer is 3 mass% or more and 13 mass% or less.

**17.** The method for producing a negative electrode for a lithium-ion secondary cell according to claim 16, wherein the obtaining the negative electrode-mixture layer is conducted in a solvent.

**18.** The method for producing a negative electrode for a lithium-ion secondary cell according to claim 16 or claim 17, further comprising removing the polycyclic aromatic compound from the negative electrode-mixture layer by immersing the negative electrode-mixture layer in a solvent in which the polycyclic aromatic compound is soluble, after the obtaining the negative electrode mixture layer.

**19.** A lithium-ion secondary cell provided with a positive electrode, a negative electrode, and an electrolyte solution, wherein:

the negative electrode has a negative electrode-mixture layer containing at least an alloy material (A) which contains silicon or tin both capable of absorbing lithium, carbon particles (B), and an imide-bond containing polymer (C),
the alloy material (A) contained in the negative electrode-mixture layer has a volume of 7 vol% or more and less than 70 vol% based on a total volume of the alloy material (A) and the carbon particles (B),
content of the imide-bond containing polymer (C) in the negative electrode-mixture layer is 3 mass% or more and 13 mass% or less, and
a total molar amount of an alkali metal and an alkaline earth metal contained in the negative electrode at full charge is larger than a molar amount of lithium calculated from a capacity of a positive electrode active material possessed by the positive electrode.

## INTERNATIONAL SEARCH REPORT

International application No. PCT/JP2016/072570

A. CLASSIFICATION OF SUBJECT MATTER

*H01M4/133*(2010.01)i, *H01M4/13*(2010.01)i, *H01M4/134*(2010.01)i, *H01M4/1393*(2010.01)i, *H01M4/1395*(2010.01)i, *H01M4/36*(2006.01)i, *H01M4/38*(2006.01)i, *H01M4/48*(2010.01)i, *H01M4/587*(2010.01)i, *H01M4/62*(2006.01)i,

According to International Patent Classification (IPC) or to both national classification and IPC

B. FIELDS SEARCHED

Minimum documentation searched (classification system followed by classification symbols)

H01M4/133, H01M4/13, H01M4/134, H01M4/1393, H01M4/1395, H01M4/36, H01M4/38, H01M4/48, H01M4/587, H01M4/62, H01M10/052, H01M10/0566

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

WPI

C. DOCUMENTS CONSIDERED TO BE RELEVANT

| Category* | Citation of document, with indication, where appropriate, of the relevant passages | Relevant to claim No. |
|---|---|---|
| X<br>A | JP 2014-103019 A (Shin-Etsu Chemical Co., Ltd.), 05 June 2014 (05.06.2014), claims 1, 10; paragraph [0082] & CN 103840136 A & KR 10-2014-0065339 A | 19<br>1-18 |
| A | JP 2012-38686 A (KRI Inc.), 23 February 2012 (23.02.2012), & US 2013/0284988 A1 & WO 2012/020815 A1 & EP 2605316 A1 | 1-19 |
| A | JP 2005-108826 A (Japan Storage Battery Co., Ltd.), 21 April 2005 (21.04.2005), & US 2005/0118083 A1 | 1-19 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 October 2016 (05.10.16) | 18 October 2016 (18.10.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/072570

C (Continuation). DOCUMENTS CONSIDERED TO BE RELEVANT

| Category* | Citation of document, with indication, where appropriate, of the relevant passages | Relevant to claim No. |
|---|---|---|
| P,A | JP 2016-58191 A (Mitsui Chemicals, Inc.), 21 April 2016 (21.04.2016), (Family: none) | 1-19 |

Form PCT/ISA/210 (continuation of second sheet) (January 2015)

**INTERNATIONAL SEARCH REPORT**

International application No.
PCT/JP2016/072570

Continuation of A. CLASSIFICATION OF SUBJECT MATTER
(International Patent Classification (IPC))

*H01M10/052*(2010.01)i, *H01M10/0566*(2010.01)i

(According to International Patent Classification (IPC) or to both national classification and IPC)

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005108826 A
- JP 2015154574 A